# EUROPEAN PATENT SPECIFICATION

(11) **EP 2 131 435 B1**
(45) Date of publication and mention of the grant of the patent: **08.03.2017**
(21) Application number: 08720507.6
(22) Date of filing: 18.03.2008
(51) Int. Cl.: H01M 8/04119, H01M 8/04223, H01M 8/1018

(54) **METHOD FOR OPERATING FUEL CELL SYSTEM, AND FUEL CELL SYSTEM**
VERFAHREN ZUM BETRIEB EINES BRENNSTOFFZELLENSYSTEMS UND BRENNSTOFFZELLENSYSTEM
PROCÉDÉ D'ACTIONNEMENT D'UN SYSTÈME DE PILE À COMBUSTIBLE, ET SYSTÈME DE PILE À COMBUSTIBLE

(30) Priority: 22.03.2007 JP 2007075311
(43) Date of publication of application: 09.12.2009
(73) Proprietor: Panasonic Intellectual Property Management Co., Ltd., Osaka-shi, Osaka 540-6207 (JP)
(72) Inventor: Yasushi SUGAWARA c/o Panasonic Corporation, Chuo-ku Osaka-shi Osaka 540-6207 (JP); Takayuki URATA c/o Panasonic Corporation, Chuo-ku Osaka-shi Osaka 540-6207 (JP); Takahiro UMEDA c/o Panasonic Corporation, Chuo-ku Osaka-shi Osaka 540-6207 (JP); Soichi SHIBATA c/o Panasonic Corporation, Chuo-ku Osaka-shi Osaka 540-6207 (JP); Junji MORITA c/o Panasonic Corporation, Chuo-ku Osaka-shi Osaka 540-6207 (JP)
(74) Representative: Leinweber & Zimmermann
(86) International application number: PCT/JP2008/000622
(87) International publication number: WO 2008/129793

(56) References cited:
- JP-A- H0 927 334
- JP-A- 06 251 788
- JP-A- 09 027 334
- JP-A- 10 270 065
- JP-A- 2001 325 974
- JP-A- 2003 142 132
- JP-A- 2003 142 132
- US-A- 6 127 057
- US-A1- 2006 014 074

## Description

### TECHNICAL FIELD

The present invention relates to an operation method of a fuel cell system (PEFC system) using a polymer electrolyte fuel cell (hereinafter expressed as PEFC), and a PEFC system using the operation method. Particularly, the present invention relates to an operation method of a PEFC system in a supply start operation of a reducing agent and an oxidizing agent to a PEFC stack, and a PEFC system using the operation method.

### BACKGROUND ART

In recent years, PEFCs which have been studied and developed for their practical use have a structure in which plural cells are stacked, each of which is provided with a reducing agent passage and an oxidizing agent passage which are isolated by a MEA (membrane electrode assembly) formed by a polymer electrolyte membrane as a base material.

In a start-up operation of a fuel cell system (PEFC system) using the PEFC as a fuel cell stack, a purge operation for purging residual gases in the reducing agent passage and the oxidizing agent passage of the PEFC stack with an inert gas or water is typically carried out to prevent degradation of the MEA. For example, Patent document 1 discloses that water is flowed in the oxidizing agent passage.

In a stopped state of the PEFC system, an oxidizing agent such as oxygen from the oxidizing agent passage or from outside may be mixed into a residual gas in the reducing agent passage, and hydrogen which is a major component of the reducing agent may be mixed into a residual gas in the oxidizing agent passage. As a result, if the reducing agent and the oxidizing agent are mixed with these residual gases, a combustion reaction unexpectedly occurs in the reducing agent passage and in the oxidizing agent passage, causing a damage to the MEA. Accordingly, Patent document 2 and Patent document 3 discloses a technique for suppressing mixing between the residual gases and the reducing agent and the oxidizing agent in the start-up operation of the PEFC system, i.e., in the supply start operation of the reducing agent and the oxidizing agent to the PEFC stack.

The technique of Patent document 2 is a technique in which a volume flow rate of the gas flowing in the reducing agent passage is increased using a hydrogen passage time reducing gas to promote purging of the residual gas from the reducing agent passage (see paragraph [0041] of Patent document 2).

The technique of Patent document 3 is a technique in which prior to supplying the reducing agent to the reducing agent passage and supplying the oxidizing agent to the oxidizing agent passage, hydrogen is flowed into the reducing agent passage and then the residual gas in the reducing agent passage is circulated in an anode circulating passage including the reducing agent passage to reduce an oxygen concentration of the residual gas in the reducing agent passage in advance (see paragraph [0017] of Patent document 3).

The technique of the Patent document 4 is a technique in which circulated water is fed to a reducing agent passage to perform purging of the interior of the reducing agent passage, while preheating an anode electrode of a PEFC, and after the preheating, the reducing agent is fed to the reducing agent passage to push out the water from the reducing agent passage and flowed in the reducing agent passage. The technique of Patent document 4 is a technique in which a pump (62) is used to circulate the water by way of the reducing agent passage (5) and the anode electrodes (2, 3), as disclosed in "Fig. 1" of this document. This document discloses that a special inert gas tank for the purging is unnecessary. Also, this document discloses that since the circulated water is flowed into the reducing agent passage to directly heat the cell, a high preheating efficiency is attained.

The technique of Patent document 5 is a technique in which a purge gas (inert gas, air, etc) is flowed into the reducing agent passage by way of a part of a coolant passage in a shut-down operation of the PEFC. According to this technique, a coolant (water) is caused to exist between the purge gas and the residual gas to enable the removal of the residual gas from the reducing agent passage in the interior of the PEFC. The residual gas is not diffused into the coolant. This document discloses that the interior of the PEFC is thus simply and economically set to an inert atmosphere in a short time, after the shut down of the PEFC.

The technique of Patent document 6 is a technique in which in shut-down of the PEFC, the operation of the PEFC is shut down and the PEFC is preserved under the state where water or a humidified inert gas is sealed in the reducing agent passage or the oxidizing agent passage. This document discloses that in the start-up operation of the PEFC system, the reducing agent or the oxidizing agent can be flowed without a special purge operation, and therefore, the amount of the purge inert gas to be consumed can be reduced.
Patent document 1: Japanese Laid-Open Patent Application Publication No. 2003-142132
Patent document 2: Japanese Laid-Open Patent Application Publication No. 2005-190854
Patent document 3: Japanese Laid-Open Patent Application Publication No. 2006-24390
Patent document 4: Japanese Laid-Open Patent Application Publication No. Hei. 10-270065
Patent document 5: Japanese Laid-Open Patent Application Publication No. Hei. 7-272737
Patent document 6: Japanese Laid-Open Patent Application Publication No. Hei. 6-251788

JP 2003 142132 A discloses a method of operating a fuel cell system according to the pre-characterizing clause of claim 1 and a fuel cell system according to the precharacterizing clause of claim 12. JP H 09 27334 A discloses that a humidified fluid is supplied to a fuel gas passage or to an oxidizing gas passage. To this end, the fuel gas passage or the oxidizing gas passage includes a groove (channel) disposed to face a polymer electrolyte membrane. According to this conventional technique, water is filled from the lower to the upper in the separator and is filled into the gas supply passage when the fuel cell is shut-down.

### DISCLOSURE OF THE INVENTION

### PROBLEMS TO BE SOLVED BY THE INVENTION

However, since the contact between the residual gas and the reducing agent in the reducing agent passage cannot be avoided in the technique of the Patent document 2, there is a room for improvement in prevention of damages to the MEA which is caused by mixing between the residual gas and the reducing agent. In addition, the control for the operation for pressurizing and supplying the hydrogen passage time reducing gas along with the reducing agent makes the control of the PEFC system complex.

Since the contact between the residual gas and the reducing agent in the reducing agent passage cannot be avoided in the technique of the Patent document 3, there is a room for improvement in prevention of damages to the cells which is caused by mixing between the residual gas and the reducing agent. In addition, since a time for circulating the residual gas mixed with hydrogen is needed, there is a room for improvement in quick start-up of the PEFC system.

Since the purging of the residual gas from the reducing agent passage and from the oxidizing agent passage with the water as disclosed in Patent document 1 requires a time to fill the water into the reducing agent passage and into the oxidizing agent passage and to remove the residual gas from the reducing agent passage and from the oxidizing agent passage, the time (start-up operation time) required for the start-up operation of the PEFC system is increased and the maneuverability of the PEFFC system is degraded.

According to the technique of Patent document 4, since time is necessary to preheat the reducing agent passage with the circulated water, the start-up operation time of the PEFC system is increased and the maneuverability of the PEFFC system is degraded. Since it is necessary to circulate water using the pump in the technique of Patent document 4, it is necessary to fill the circulated water in the reducing agent passage and in the anode electrode. Therefore, there is a room for improvement in reduction of the start-up operation time.

According to the technique of Patent document 5, there is a possibility that the oxidizing agent such as oxygen may be mixed into the purge gas within the reducing agent passage before the start-up operation starts after the shut-down operation. This arises a need to perform purging of the interior of the reducing agent passage in the start-up operation of the PEFC system. However, it is necessary to preheat the PEFC up to a temperature near a reaction temperature using the coolant in the start-up operation of the PEFC. In the operation state after the start-up operation, a cooling system is used. For this reason, the reducing agent cannot be flowed into the reducing agent passage by way of the coolant passage in the start-up operation of the PEFC system. Consequently, the technique of Patent document 5 cannot be employed.

According to the technique of Patent document 6, the purge operation in the start-up operation of the PEFC system may be omitted, and the start-up operation time of the PEFC system can be reduced. However, since a considerable amount of water is needed for use in the preservation, separately from the water for cooling, there is a room for improvement in simplification of the structure of the PEFC system. In particular, in the PEFC system mounted in mobile objects such as automobile, it is necessary to reduce the volume and weight of the PEFC system. Also, because of the fact that the operation of the PEFC is shut down and the PEFC is preserved under the state where the water or the humidified gas is sealed thereinto, degradation of the diffusability of the electrode is promoted.

The present invention has been made to solve the above described problem, and an object of the present invention is to provide an operation method of a PEFC system, which is capable of omitting purging of a reducing agent passage or an oxidizing agent passage using water or an inert gas in a start-up operation of the PEFC system, and a PEFC system using the operation method.

### MEANS FOR SOLVING THE PROBLEM

To solve the above described problem, the inventors focused an attention on an operation method which does not cause formation of an interface between the residual gas and the oxidizing agent or the reducing agent and studied it intensively. As a result of this, the inventors discovered an operation method for forming a water layer for clogging a part of a reducing agent supply path which is located upstream of a reducing agent supply end of the reducing agent passage and a part of an oxidizing agent supply path which is located upstream of the oxidizing agent supply end of the oxidizing agent passage within a PEFC stack.

To be specific, a method of operating a fuel cell system, according to a first invention including a reducing agent supplier for supplying a reducing agent; an oxidizing agent supplier for supplying an oxidizing agent; a fuel cell stack including plural cells stacked, the cells being each provided with a reducing agent passage and an oxidizing agent passage which are isolated by an MEA having a polymer electrolyte membrane as a base material; a reducing agent supply path to which reducing agent supply ends which are end portions of reducing agent passages of all of the cells are connected; an oxidizing agent supply path to which oxidizing agent supply ends which are end portions of oxidizing agent passages of all of the cells are connected; and a water supplier for supplying water to at least one of the reducing agent supply path and the oxidizing agent supply path; the method comprising: a water layer forming step in which before starting supply of at least one of the reducing agent and the oxidizing agent in a supply start operation of at least one of the reducing agent and the oxidizing agent, the water supplier supplies water to form a water layer so as to clog at least one of at least a portion of the reducing agent supply path which is located upstream of the reducing agent supply end in a flow direction of the reducing agent and at least a portion of the oxidizing agent supply path which is located upstream of the oxidizing agent supply end in a flow direction of the oxidizing agent.

In such a configuration, the purging of the reducing agent passage and the oxidizing agent passage using the water or the inert gas can be omitted in the start-up operation of the fuel cell system. That is, the fuel cell system can be started-up quickly. In addition, the inert gas or water for the purging may be omitted. Therefore, the fuel cell system can be reduced in size and weight.

The method of operating the fuel cell system according to a second invention, in the water layer forming step, a water supply pressure and a water supply time of the water supplied from the water supplier may be respectively a water supply pressure and a water supply time with which the water does not pass through all of reducing agent passages and all of oxidizing agent passages. In such a configuration, the operation method of the fuel cell system of the present invention can be made efficient.

The method of operating the fuel cell system according to a third invention, in the water layer forming step, a water supply pressure of the water supplied from the water supplier may be lower than a supply pressure of the reducing agent supplied from the reducing agent supplier and a supply pressure of the oxidizing agent supplied from the oxidizing agent supplier. In such a configuration, the operation method of the fuel cell system of the present invention can be practiced more easily.

In the method of operating the fuel cell system according a fourth invention, the fuel cell system may further include a valve connected to a discharge side of at least one of the reducing agent passage and the oxidizing agent passage, and in the water layer forming step, the supply of the water may be started in a state where the valve is open, and the valve is closed in at least one of a state where the water has reached all of the reducing agent supply ends and a state where the water has reached all of the oxidizing agent supply ends to stop supply of the water. In such a configuration, since the pressure of the supplied water at a downstream side can be increased, the water layer can be formed more smoothly.

In the method of operating the fuel cell system according to a fifth invention, the fuel cell system may further include a combustor connected to a discharge side of at least one of the reducing agent passage and the oxidizing agent passage; and the method may further comprise a combustion step, in which in the water layer forming step, the combustor combusts a residual gas discharged from at least one of the reducing agent passage and from the oxidizing agent passage. In such a configuration, since the combustible gas can be combusted, the fuel cell system can be operated more safely.

In the method of operating the fuel cell system according to a sixth invention, the fuel cell system may further include a gas-liquid separator which is connected to a discharge side of at least one of the reducing agent passage and the oxidizing agent passage and connected to an upstream side of the combustor; and the method may further comprise a separating step, in which in the water layer forming step, the gas-liquid separator separates the residual gas and water discharged from at least one of the reducing agent passage and the oxidizing agent passage and flows only the gas to the combustor. This configuration enables the water supplier to re-use the water recovered in the gas-liquid separator. Therefore, water supply from outside the fuel cell system can be saved. In addition, the flow of water into the combustor can be prevented.

In the method of operating the fuel cell system according to a seventh invention, the water supplier may be constituted by utilizing a cooling water supplier of the fuel cell stack. In such a configuration, the operation method of the fuel cell system of the present invention can be made efficient. In addition, the configuration of the fuel cell system of the present invention can be more simplified.

In the method of operating the fuel cell system according to an eighth invention, the water supplier may be operable independently of a cooling water supplier of the fuel cell stack. In such a configuration, flexibility of the start-up operation of the fuel cell system of the present invention can be improved.

In the method of operating the fuel cell system according to a ninth invention, in a state where the residual gas in the reducing agent passage is the reducing agent and the residual gas in the oxidizing agent passage is an inert gas, the water layer forming step may be performed only for the oxidizing agent supply path. In such a configuration, there is no possibility that the oxidizing agent is mixed into the residual gas in the reducing agent passage. Since the supply of the water to the reducing agent supply manifold can be omitted, the fuel cell system can be started-up more quickly.

In the method of operating the fuel cell system according to a tenth invention, in a state where the residual gas in the reducing agent passage is an inert gas and the residual gas in the oxidizing agent passage is the oxidizing agent, the water layer forming step may be performed only for the reducing agent supply path. In such a configuration, there is no possibility that the reducing agent is mixed into the residual gas in the oxidizing agent passage. Since the supply of the water to the oxidizing agent supply manifold can be omitted, the fuel cell system can be started-up more quickly.

In the method of operating the fuel cell system according to an eleventh invention, in a state where the residual gas in the reducing agent passage is the reducing agent and the residual gas in the oxidizing agent passage is the oxidizing agent, the water layer forming step may be performed for both of the reducing agent supply path and the oxidizing agent supply path. In such a configuration, in a case where there is a possibility that the oxidizing agent is mixed into the residual gas in the reducing agent passage and the reducing agent is mixed into the residual gas in the oxidizing agent passage, the damage to the MEA in the start-up operation of the fuel cell system can be prevented more surely.

In the method of operating the fuel cell system according to a twelfth invention, the reducing agent supply path may have a reducing agent supply manifold to which the reducing agent supply ends of all of the cells are connected; the oxidizing agent supply path may have an oxidizing agent supply manifold to which the oxidizing agent supply ends of all of the cells are connected; and in the water layer forming step, an amount of the water supplied is an amount of the water with which at least one of the reducing agent supply manifold and the oxidizing agent supply manifold is flooded. In such a configuration, the present invention can be carried out more properly.

A fuel cell system according to a thirteenth invention comprises a reducing agent supplier for supplying a reducing agent; an oxidizing agent supplier for supplying an oxidizing agent; a fuel cell stack including plural cells stacked, the cells being each provided with a reducing agent passage and an oxidizing agent passage which are isolated by an MEA having a polymer electrolyte membrane as a base material; a reducing agent supply path to which reducing agent supply ends which are end portions of reducing agent passages of all of the cells are connected; an oxidizing agent supply path to which oxidizing agent supply ends which are end portions of oxidizing agent passages of all of the cells are connected; and a water supplier for supplying water to at least one of the reducing agent supply path and the oxidizing agent supply path; and a controller; wherein the controller is configured to, cause the water supplier to supply water to form a water layer so as to clog at least one of at least a portion of the reducing agent supply path which is located upstream of the reducing agent supply end in a flow direction of the reducing agent and at least a portion of the oxidizing agent supply path which is located upstream of the oxidizing agent supply end in a flow direction of the oxidizing agent, before starting supply of at least one of the reducing agent and the oxidizing agent in a supply start operation of at least one of the reducing agent and the oxidizing agent. In such a configuration, the purging of the reducing agent passage and the oxidizing agent passage using the water or the inert gas can be omitted in the start-up operation of the fuel cell system. That is, the fuel cell system can be started-up quickly. In addition, the inert gas or water for the purging may be omitted. As a result, the PEFC system can be reduced in size and weight.

The fuel cell system according to a fourteenth invention, may further comprise: a combustor connected to a discharge side of at least one of the reducing agent passage and the oxidizing agent passage; and the controller may be configured to cause the combustor to combust the residual gas discharged from at least one of the reducing agent passage and the oxidizing agent passage in formation of the water layer. In such a configuration, since the combustible residual gas can be combusted, the fuel cell system can be operated more safely.

The fuel cell system according to a fifteenth invention may further comprise a gas-liquid separator which is connected to a discharge side of at least one of the reducing agent passage and the oxidizing agent passage; and the controller may be configured to cause the gas-liquid separator to separate the residual gas and water discharged from at least one of the reducing agent passage and the oxidizing agent passage and to flow only the gas to the combustor, in formation of the water layer. This configuration enables the water supplier to re-use the water recovered in the gas-liquid separator. Therefore, water supply from outside the fuel cell system can be saved. In addition, the flow of water into the combustor can be prevented.

In the fuel cell system according to a sixteenth invention, the water supplier may be constituted by utilizing a cooling water supplier of the fuel cell stack.
In such a configuration, the operation method of the fuel cell system of the present invention can be made efficient. In addition, the configuration of the fuel cell system of the present invention can be more simplified.

In the fuel cell system according to a seventeenth invention, the water supplier may be operable independently of a cooling water supplier of the fuel cell stack. In such a configuration, flexibility of the start-up operation of the fuel cell system of the present invention can be improved.

### EFFECTS OF THE INVENTION

In accordance with the operation method of the fuel cell system of the present invention and a fuel cell system using the operation method, the purging of the reducing agent passage and the oxidizing agent passage using the water or the inert gas can be omitted in the start-up operation of the fuel cell system. That is, the fuel cell system can be started-up quickly. As a result, the inert gas or water for the purging may be omitted. Therefore, the fuel cell system can be reduced in size and weight.

### BRIEF DESCRIPTION OF THE DRAWINGS

[Fig. 1] Fig. 1 is a partially exploded perspective view schematically showing a stack structure of cells and a PEFC stack according to Embodiment 1 of the present invention.
[Fig. 2] Fig. 2 is a cross-sectional view of major components showing a structure of the cell of Fig.1.
[Fig. 3] Fig. 3 is an exploded perspective view schematically showing a stack structure of cells of the PEFC stack of Fig. 1.
[Fig. 4] Fig. 4 is an exploded perspective view schematically showing a structure of an end portion of the PEFC stack of Fig. 1.
[Fig. 5] Fig. 5 is a view schematically showing a configuration of a PEFC system according to Embodiment 1.
[Fig. 6] Fig. 6 is a flowchart showing an example of supply start operation of an oxidizing agent in the start-up operation of the PEFC system of Fig. 5.
[Fig. 7] Fig. 7 is a view schematically showing a configuration of a PEFC system according to Embodiment 2.
[Fig. 8] Fig. 8 is a flowchart showing an example of supply start operation of a reducing agent in the start-up operation of the PEFC system of Fig. 7.
[Fig. 9] Fig. 9 is a view schematically showing a configuration of a PEFC system according to Embodiment 3.
[Fig. 10] Fig. 10 is a flowchart showing an example of supply start operation of the reducing agent and the oxidizing agent in the start-up operation of the PEFC system of Fig. 9.
[Fig. 11] Fig. 11 is a view showing modification of a supply-side connecting passage in the PEFC system of Fig. 5.
[Fig. 12] Fig. 12 is a view showing modification of a valve structure in the PEFC system of Fig. 5.
[Fig. 13] Fig. 13 is a plan view showing an anode separator plate of the PEFC stack of Fig. 1 in modification 3.
[Fig. 14] Fig. 14 is a plan view showing a cathode separator plate of the PEFC stack of Fig. 1 in modification 3.
[Fig. 15] Fig. 15 is a cross-sectional view showing an oxidizing agent supply manifold region of the PEFC stack of Fig. 1 in modification 3, a part of the cross-section being illustrated as enlarged.

### EXPLANATION OF REFERENCE NUMERALS

- 1: polymer electrolyte membrane
- 2A: anode catalyst layer
- 2C: cathode catalyst layer
- 4A: anode gas diffusion layer
- 4C: cathode gas diffusion layer
- 5: MEA
- 6: frame
- 7: MEA member
- 9A: anode separator plate
- 9C: cathode separator plate
- 10: cell
- 12I, 22I, 321I: reducing agent supply manifold hole
- 12E, 22E, 32E: reducing agent discharge manifold hole
- 13I, 23I, 33I: oxidizing agent supply manifold hole
- 13E, 23E, 33E: oxidizing agent discharge manifold hole
- 14I, 24I, 34I: water supply manifold hole
- 14E, 24E, 34E: water discharge manifold hole
- 15,25,35,55,65,75: bolt hole
- 20,30: MEA contact region
- 21: reducing agent passage
- 21I: reducing agent supply end
- 26,36: water passage
- 31: oxidizing agent passage
- 31I: oxidizing agent supply end
- 50,51: current collecting plate
- 56: terminal
- 60,61: insulating plate
- 70,71: end plate
- 52I, 62I, 72I: reducing agent supply hole
- 52E, 62E, 72E: reducing agent discharge hole
- 53I, 63I, 73I: oxidizing agent supply hole
- 53E, 63E, 73E: oxidizing agent discharge hole
- 54I, 64I, 74I: water supply hole
- 54E, 64E, 74E: water discharge hole
- 80: bolt
- 81: washer
- 82: nut
- 92I: reducing agent supply manifold
- 92E: reducing agent discharge manifold
- 93I: oxidizing agent supply manifold
- 93E: oxidizing agent discharge manifold
- 94I: water supply manifold
- 94E: water discharge manifold
- 99: PEFC stack
- 102I: reducing agent supply nozzle
- 102E: reducing agent discharge nozzle
- 103I: oxidizing agent supply nozzle
- 103E: oxidizing agent discharge nozzle
- 104I: water supply nozzle
- 104E: water discharge nozzle
- 112I: reducing agent supply path
- 112E: reducing agent discharge path
- 113I: oxidizing agent supply path
- 113E: oxidizing agent discharge path
- 114I: water supply path
- 114E: water discharge path
- 121: supply-side connecting passage (first supply-side connecting passage)
- 122: discharge-side connecting passage
- 123: second supply-side connecting passage
- 125: combustor
- 126,127: gas-liquid separator
- 131V, 132V, 133V, 134V, 135V, 136V, 139V: valve
- 137V, 138V: three-way valve
- 142: reducing agent supplier
- 143: oxidizing agent supplier
- 144: water supplier
- 145: second water supplier
- 151,152,153,154: residual gas treatment system
- 300: controller
- 301: input unit
- 302: memory unit
- 303: time measuring unit
- 304: control unit
- S: step
- T, TA, Tc: time
- T1: water supply time
- T2: gas discharge time
- W: water

### BEST MODE FOR CARRYING OUT THE INVENTION

Hereinafter, the best mode for carrying out the invention will be described with reference to the drawings.

### (Embodiment 1)

Initially, a configuration of a PEFC stack (fuel cell stack) 99 of this embodiment will be described.

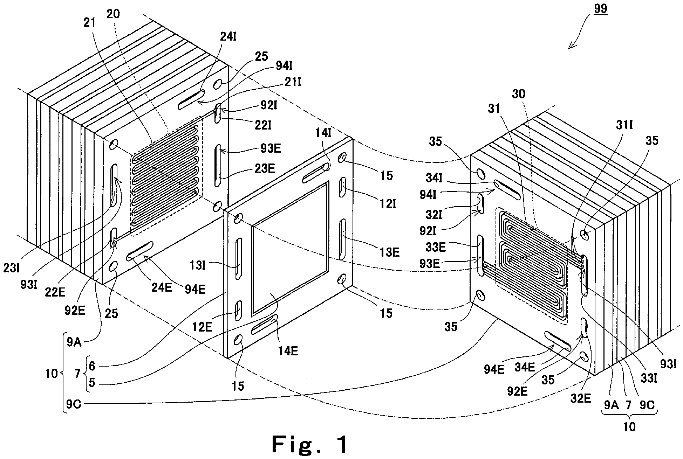

Fig. 1 is a partially exploded perspective view schematically showing a stack structure of cells and a PEFC stack according to Embodiment 1 of the present invention.

In general, the PEFC is configured to include a PEFC stack (stack) 99 in which plural cells 10 are stacked, a reducing agent supply manifold 92I, an oxidizing agent supply manifold 93I, a water supply manifold 94I, a reducing agent discharge manifold 92E, an oxidizing agent discharge manifold 93E, and a water discharge manifold 94E. Reducing agent supply ends 21I of the reducing agent passages 21 of all of the cells 10 are connected to the reducing agent supply manifold 92I, while oxidizing agent supply ends 31I of the oxidizing agent passages 31 of all of the cells 10 are connected to the oxidizing agent supply manifold 93I. In this embodiment, as shown in Fig. 1, the manifolds 92I, 93I, 94I, 92E, 93E, and 94E are integrated into the PEFC stack 99. In this embodiment, the PEFC is so-called internal manifold type PEFC.

The cell 10 has an anode separator plate 9A and a cathode separator plate 9C (these are collectively referred to as separators) which are opposite to each other so as to sandwich a MEA 5. To be precise, the cell 10 has a structure in which a MEA component 7 is sandwiched between a pair of separator plates 9A and 9C.

In this embodiment, all of the separator plates 9A and 9C and all of the MEA components 7 are provided with manifold holes which are stacked to penetrate the plate surfaces thereof. The plural separator plates 9A and 9C and the plural MEA components 7 are stacked so that the reducing agent supply manifold 92I, the oxidizing agent supply manifold 93I, the water supply manifold 94I, the reducing agent discharge manifold 92E, the oxidizing agent discharge manifold 93E and the water discharge manifold 94E extend along the direction in which the cells 10 are stacked.

To be specific, in a plan view (as viewed from the thickness direction of the separator plates 9A and 9C), in peripheral portions of the separator plates 9A and 9C and the MEA component 7, bolt holes 15, 25, and 35, the reducing agent supply manifold holes 12I, 22I, and 32I, the reducing agent discharge manifold holes 12E, 22E, and 32E, the oxidizing agent supply manifold holes 13I, 23I, and 33I, the oxidizing agent discharge manifold holes 13E, 23E, and 33E, the water supply manifold holes 14I, 24I and 34I, and the water discharge manifold holes 14E, 24E, and 34E are formed to penetrate through the respective main surfaces. The reducing agent supply manifold holes 12I, 22I, and 32I are connected to extend through the PEFC stack 99 to form the reducing agent supply manifold 92I and the reducing agent discharge manifold holes 12E, 22E, and 32E are connected to extend through the PEFC stack 99 to form the reducing agent discharge manifold 92E. Likewise, the oxidizing agent supply manifold holes 13I, 23I, and 33I are connected to extend through the PEFC stack 99 to form the oxidizing agent supply manifold 93I, and the oxidizing agent discharge manifold holes 13E, 23E, and 33E are connected to extend through the PEFC stack 99 to form the oxidizing agent discharge manifold 93E. Furthermore, likewise, the water supply manifold holes 14I, 24I and 34I are connected to extend through the PEFC stack 99 to form the water supply manifold 94I and the water discharge manifold holes 14E, 24E, and 34E are connected to extend through the PEFC stack 99 to form the water discharge manifold 94E.

Typically, in a power generation operation of the PEFC stack 99, the oxidizing agent is larger in flow rate than the reducing agent, and therefore, the shape of the oxidizing agent manifolds 93I and 93E have a size larger than that of the reducing agent manifolds 92I and 92E. For example, in Fig. 1, the passage cross section (cross section in the extending direction) of the oxidizing agent supply manifold 93I and the passage cross section (cross section in the extending direction) of the oxidizing agent discharge manifold 93E have an oval shape in which a long diameter is about 50mm and a short diameter is 20mm, while the passage cross section (cross section in the extending direction) of the reducing agent supply manifold 92I and the passage cross section (cross section in the extending direction) of the reducing agent discharge manifold 92E have an oval shape in which a long diameter is about 30mm and a short diameter is 20mm.

The separator plates 9A and 9C are formed of an electrically-conductive material. For example, the separator plates 9Aand 9C are formed of, for example, graphite plates, graphite plates impregnated with phenol resin, or metal plates. The anode separator plate 9A is provided on an inner surface thereof with a groove-shaped reducing agent passage 21 connecting the reducing agent supply manifold hole 22I to the reducing agent discharge manifold hole 22E. The reducing agent supply end 21I is formed on a part of a wall surface of the reducing agent supply manifold hole 22I. The reducing agent passage 21 is formed in a serpentine shape over substantially the entire surface of the MEA contact region 20.

Likewise, the cathode separator plate 9C is provided on an inner surface thereof with a groove-shaped oxidizing agent passage 31 connecting the oxidizing agent supply manifold hole 33I to the oxidizing agent discharge manifold hole 33E. The oxidizing agent supply end 31I is formed on a part of a wall surface of the oxidizing agent supply manifold hole 33I. The oxidizing agent passage 31 is formed in a serpentine shape over substantially the entire surface of the MEA contact region 30.

Thus, in an assembled state of the cell 10, the MEA 5 serves as a groove lid for the reducing agent passage 21 and the oxidizing agent passage 31. To be precise, the reducing agent passage 21 and the oxidizing agent passage 31 are isolated from each other by the MEA 5, forming flow passages. Between the MEA component 7 and the anode separator plate 9A, the reducing agent passage 21 extending to connect the reducing agent supply manifold hole 22I to the reducing agent discharge manifold hole 22E is formed. Between the MEA component 7 and the cathode separator plate 9C, the oxidizing agent passage 31 extending to connect the oxidizing agent supply manifold hole 33I to the oxidizing agent discharge manifold hole 33E is formed.

As in the shape ratio of the oxidizing agent manifold and the reducing agent manifold, the passage cross-sectional area of the oxidizing agent passage 31 is larger than the passage cross-sectional area of the reducing agent passage 21, because the flow rate of the oxidizing agent is typically higher than the flow rate of the reducing agent in the power generation operation of the PEFC stack 99. To this end, typically, the passage cross-sectional area is adjusted by the number of the groove-shaped passages. In this embodiment, the groove width of the reducing agent passage 21 and the oxidizing agent passage 31 is about 2mm, and the groove depth of the reducing agent passage 21 and the oxidizing agent passage 31 is about 1mm. As shown in Fig. 1, the reducing agent passage 21 shown in Fig. 1 is formed by one passage groove, while the oxidizing agent passage 31 is formed by three passage grooves. Note that, the number of grooves forming the reducing agent passage 21 and the number of grooves forming the oxidizing agent passage 31 of this embodiment are not limited those in this embodiment. Typically, the number of grooves of the oxidizing agent passage 31 is larger than the number of grooves of the reducing agent passage 21, and the reducing agent passage 21 is formed by one to five grooves and the oxidizing agent passage 31 is formed by three to ten grooves. The supply ends 21I and 31I (the reducing agent supply end 21I and the oxidizing agent supply end 31I are collectively referred to as the supply ends 21I and 31I) have an opening shape in which a single or plural rectangular holes of 1 mm × 2mm, in other words, holes having a size of about several mm², is/are arranged.

As should be appreciated from the above, the opening areas of the supply ends 21I and 31I are sufficiently smaller than the cross-sectional areas of the associated supply manifold holes 22I and 33I. The opening shape has plural divided parts. Therefore, a considerable water supply pressure is needed to flow liquid-phase water having viscosity into the supply ends 21I and 31I from the associated supply manifold holes 22I and 33I.

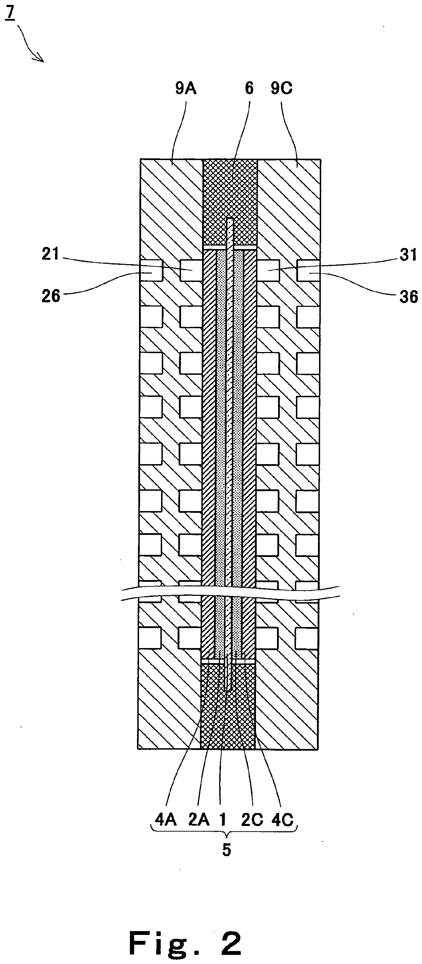

Fig. 2 is a cross-sectional view of major components showing a structure of the cell of Fig. 1.

The MEA component 7 is configured to include the MEA 5 and frame members 6 which are in close contact with portions of the polymer electrolyte membrane 1 extending in a peripheral portion of the MEA 5 so as to sandwich the polymer electrolyte membrane 1. Therefore, the MEA 5 is exposed on both surfaces of center openings (inward of frames) of the frame members 6. The frame member 6 is formed of an elastic material having environmental resistance and serves as a gasket. As an example of the material of the frame member 6, fluorine-based material is suitable.

The MEA 5 is configured to include the polymer electrolyte membrane 1 and a pair of electrodes stacked on both surfaces thereof. To be specific, the MEA 5 includes the polymer electrolyte membrane 1 formed by an ion exchange membrane which is considered to allow hydrogen ions to selectively permeate therethrough, and a pair of electrode layers formed on the both surfaces of the portion which is inward of the peripheral portion of the polymer electrolyte membrane 1. The anode electrode layer is configured to include an anode electrode layer 2A provided on one surface of the polymer electrolyte membrane 1 and an anode gas diffusion layer 4A provided on the outer surface of the anode catalyst layer 2A. The cathode electrode layer is configured to include a cathode catalyst layer 2C provided on the other surface of the polymer electrolyte membrane 1 and a cathode gas diffusion layer 4C provided on the outer surface of the cathode catalyst layer 2C. The catalyst layers 2A and 2C are formed by carbon powder carrying platinum group metal catalyst as major component. The gas diffusion layers 4A and 4C have a porous structure having gas permeability and electron conductivity.

As the polymer electrolyte membrane 1, a membrane made of perfluorosulfonic acid is suitable. For example, as an example of the polymer electrolyte membrane 1, there is Nafion (registered trade mark) membrane manufactured by DuPont Co.Ltd. The MEA 5 is typically manufactured by sequentially applying the catalyst layers 2A and 2C and the gas diffusion layers 4A and 4C on the polymer electrolyte membrane 1, printing of them, hot pressing of them, etc. Alternatively, a commercially available product may be used.

In an assembled state of the cell 10, the gas diffusion layer 4A is in contact with a MEA contact region 20 (see Fig. 1) of the inner surface of the anode separator plate 9A, while the cathode gas diffusion layer 4C is in contact with a MEA contact region 30 (see Fig. 1) of the inner surface of the cathode separator plate 9C.

The reducing agent passage 21 of the anode separator plate 9A is in contact with the anode gas diffusion layer 4A. Thereby, the reducing agent flowing within the reducing agent passage 21 enters the interior of the porous anode gas diffusion layer 4A while diffusing into the interior without leaking to outside, and reaches the anode catalyst layer 2A. In the same manner, the oxidizing agent passage 31 of the cathode separator plate 9C is in contact with the cathode gas diffusion layer 4C. Thereby, the oxidizing agent flowing within the oxidizing agent passage 31 enters the interior of the porous cathode gas diffusion layer 4C while diffusing into the interior without leaking to outside, and reaches the cathode catalyst layer 2C. Then, a cell reaction is able to occur. Since the separator plates 9A and 9C are made of an electrically-conductive material, an electric energy generated in the MEA 5 can be taken out by way of the separator plates 9A and 9C.

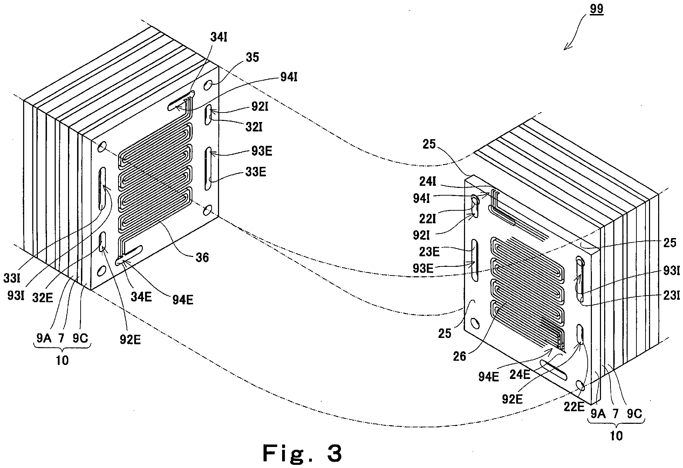

Fig. 3 is an exploded perspective view schematically showing a stack structure of cells of the PEFC stack of Fig. 1.

As shown in Fig. 3, the anode separator plate 9A is provided on an outer surface thereof with a groove-shaped water passage 26 connecting the water supply manifold hole 24I to the water discharge manifold hole 24E. The water passage 26 is formed in a serpentine shape over the entire surface of a back portion of the MEA contact region 20. Likewise, the cathode separator plate 9C is provided on an outer surface thereof with a groove-shaped water passage 36 connecting the water supply manifold hole 34I to the water discharge manifold hole 34E. The water passage 36 is formed in a serpentine shape over the entire surface of a back portion of the MEA contact region 30. In the PEFC stack 99, the water passage 26 and the water passage 36 are formed such that they are joined to each other. That is, in the stacked state of the cells 10, the water passages 26 and 36 are integrated and a water passage extending to connect the water supply manifold 24I to the water discharge manifold hole 24E and a water passage extending to connect the water supply manifold 34I to the water discharge manifold hole 34E are formed between the surfaces of the cells 10 stacked. Thereby, water can be used as a heat transmission medium. That is, with the water flowing in the PEFC stack 99, the reaction heat of the PEFC stack 99 can be removed in the power generation operation and the PEFC stack 99 can be warmed-up before start of the power generation operation.

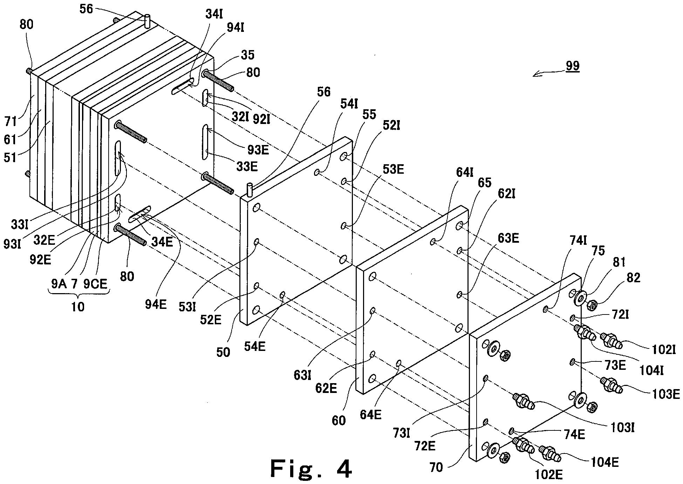

Fig. 4 is an exploded perspective view schematically showing a structure of an end portion of the PEFC stack of Fig. 1.

The PEFC stack 99 has a structure in which a pair of end members are provided at both ends in the direction in which the cells 10 are stacked. To be specific, on the outermost layers at both ends of the cells 10, current collecting plates 50 and 51, insulating plates 60 and 61, and end plates 70 and 71, having the same planar shape as the cells 10, are stacked. Bolt holes 55, 65, and 75 are formed at four corners of the current collecting plates 50 and 51, the insulating plates 60 and 61, and the end plates 70 and 71.

The current collecting plates 50 and 51 are made of an electrically-conductive material such as copper metal and are respectively provided with terminals 56. The current collecting plate 50 is provided with a supply hole and a discharge hole extending through a main surface thereof. To be specific, a water supply hole 54I connected to the water supply manifold hole 34I of a cathode separator plate 9CE which is in contact with the current collecting plate 50, i.e., the cathode separator plate 9CE forming one end surface of the cells 10 stacked, a water discharge hole 54E connected to the water discharge manifold hole 34E of the cathode separator plate 9CE, a reducing agent supply hole 52I connected to the reducing agent supply manifold hole 32I of the cathode separator plate 9CE, a reducing agent discharge hole 52E connected to the reducing agent discharge manifold hole 32E of the cathode separator plate 9CE, an oxidizing agent supply hole 53I connected to the oxidizing agent supply hole 33I of the cathode separator plate 9CE, and an oxidizing agent discharge hole 53E connected to the oxidizing agent discharge manifold hole 33E are formed.

The insulating plates 60 and 61 and the end plates 70 and 71 are made of an electrically-insulating material. The insulating plate 60 is provided with a reducing agent supply hole 62I, a reducing agent discharge hole 62E, an oxidizing agent supply hole 63I, an oxidizing agent discharge hole 63E, a water supply hole 64I, and a water discharge hole 64E which are respectively connected to the supply holes and the discharge holes 52I, 52E, 53I, 53E, 54I, and 54E which are formed on the current collecting plate 50. The end plate 70 is provided with a reducing agent supply hole 72I, a reducing agent discharge hole 72E, an oxidizing agent supply hole 73I, an oxidizing agent discharge hole 73E, a water supply hole 74I, and a water discharge hole 74E which are respectively connected to the supply holes and the discharge holes 62I, 62E, 63I, 63E, 64I, and 64E which are formed on the insulating plate 60.
A reducing agent supply nozzle 102I, a reducing agent discharge nozzle 102E, an oxidizing agent supply nozzle 103I, an oxidizing agent discharge nozzle 103E, a water supply nozzle 104I and a water discharge nozzle 104E are attached to the supply holes and the discharge holes 72I, 72E, 73I, 73E, 74I, and 74E on the outer surface side of the end plate 70. As these nozzles, general connecting members with outside pipe members are used. Although not shown, the current collecting plate 51, the insulating plate 61, and the end plate 71 are similar in structure to the current collecting plate 50, the insulating plate 60, and the end plate 70 except that the supply holes and the discharge holes are not formed on the current collecting plate 51, the insulating plate 61, and the end plate 71. Thereby, in the interior of the PEFC stack 99, there are formed passages in which the reducing agent, the oxidizing agent, and the water flow through the supply holes 52I, 62I, 72I, 53I, 63I, 73I, 54I, 64I and 74I and the supply manifolds 92I, 93I, and 94I, branch at the supply manifolds 92I, 93I and 94I into the cells 10 or the passages 21, 31, 26, and 36 between the cells 10, merge at the discharge manifolds 92E, 93E and 94E, and flow from the discharge manifolds 92E, 93E, and 94E to the discharge holes 52E, 62E, 72E, 53E, 63E, 73E, 54E, 64E, and 74E.

The fastener member fasten a pair of end plates and components between them. A bolt 80 is inserted into the bolt holes 15, 25, 35, 55, 65, and 75 so as to penetrate through the PEFC stack 99 to the both ends thereof. A washer 81 and a nut 82 are attached to each of both ends of the bolts 80, and the pair of end plates 70 and 71 and the members between them are fastened by the bolts 80, the washers 81 and the nuts 82. For example, they are fastened with a force of about 10kgf/cm² per area of the separator.

Note that the water passage 36 is not formed on the outer surface of the cathode separator plate 9CE forming one end surface of the cells 10 stacked. In addition, the water passage 26 is not formed on the outer surface of the anode separator forming the other end surface of the cells 10 stacked.

As can be seen from the explanation with reference to Figs. 1 to 4, in the PEFC stack 99, the reducing agent supplied to the PEFC stack 99 branches at the reducing agent supply manifold 92I into the respective reducing agent supply ends 21I and flow in the reducing agent passages 21. In the same manner, the oxidizing agent supplied to the PEFC stack 99 branches at the oxidizing agent supply manifold 93I into the respective oxidizing agent supply ends 31I and flow in the oxidizing agent passages 31.

Hereinafter, the finding discovered by the present inventors will be described.

Basically, the PEFC stack 99 is configured so that, to make the generated electric power uniform in the cells 10 which are as many as possible, the reducing agent branching from the reducing agent supply path 112I described later into the respective reducing agent supply ends 21I flows at a uniform rate and the oxidizing agent branching from the oxidizing agent supply path 113I into the oxidizing agent supply ends 31I flows at a uniform rate. To be specific, typically, the PEFC stack 99 is designed so that the passage cross-sectional area of the reducing agent supply manifold 92I forming a part of the reducing agent supply path 112I, and the passage cross-sectional area of the oxidizing agent supply manifold 93I forming a part of the oxidizing agent supply path 113I are larger than the passage cross-sectional area of the reducing agent passage 21 and the passage cross-sectional area of the oxidizing agent passage 31, respectively. In addition, the PEFC stack 99 is designed so that the back pressure at the discharge side of the reducing agent passage 21 and at the discharge side of the oxidizing agent passage 31 are uniform. For example, the reducing agent discharge manifold 92E and the oxidizing agent discharge manifold 93E are provided. Thereby, in the reducing agent supply manifold 92I and the oxidizing agent supply manifold 93I, the pressure of a fluid is made uniform, and the flow rate of the fluid in the reducing agent passage 21 and the oxidizing agent passage 31 in all of the cells 10 is made uniform. The present inventors found out that in the passage structure in which the passage branches from the reducing agent supply manifold 92I into the reducing agent passage 21 and the passage branches from the oxidizing agent supply manifold 93I into the oxidizing agent passages 31, a relatively large passage resistance is generated at the supply ends 21I and 31I. That is, the pressure required to flow the fluid from the manifolds 92I and 93I into the reducing agent passage 21 and the oxidizing agent passage 31 is larger than the pressure required to flow the fluid into the manifold 92I and 93I. In addition, the supply ends 21I and 31I are defined as opening units which are as small as about several mm², and a passage resistance because of the such shape effect is applied to the water, when the water is flowed because the liquid-phase water has viscosity such as surface tension. Further, the present inventors presumed that when the water flows through the oxidizing agent passage 31 and the reducing agent passage 21, the passage resistance of the passages 21 and 31 is applied to the water. To be specific, in the case where the water is supplied to the reducing agent supply manifold 92I and the oxidizing agent supply manifold 93I, the residual gases in these manifolds are pushed away by the water to outside the PEFC stack 99 by way of the reducing agent passage 21 and the oxidizing agent passage 31. However, depending on the water pressure of the water supplied, the water does not flow through the reducing agent passage 21 and the oxidizing agent passage 31 because of factors such as the passage resistance and cause the supply ends 21I and 31I to be flooded. In other words, the water clogs a part of the reducing agent supply path 112I and a part of the oxidizing agent supply path 113I, i.e., the reducing agent supply manifold 92I and the oxidizing agent supply manifold 93I. The present inventors conceived the present invention by utilizing the findings. That is, it is possible to discover an operation method of the PEFC system which can omit the purging of the reducing agent passage and the purging of the oxidizing agent passage with the water or the inert gas in the start-up operation of the PEFC system, and the PEFC system using the operation method.

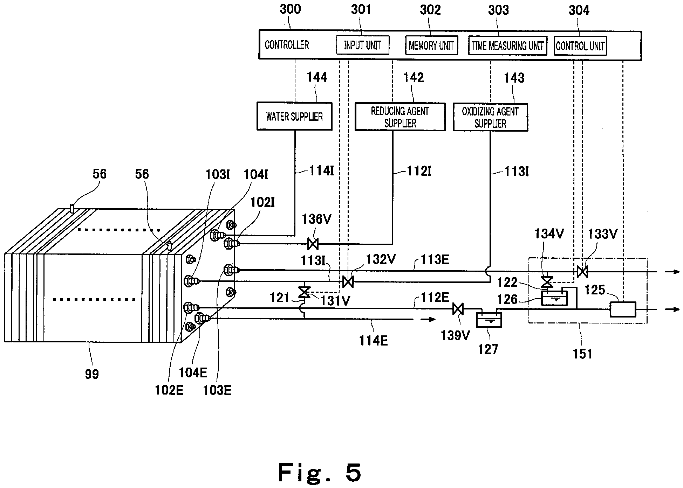

Fig. 5 is a view schematically showing a configuration of a PEFC system according to Embodiment 1.

As shown in Fig. 5, the reducing agent supply path 112I is connected to the reducing agent supply nozzle 102I of the PEFC stack 99, and is connected to the reducing agent supplier 142. A valve 136V is provided in the reducing agent supply path 112I.

In this embodiment, as the reducing agent, a hydrogen gas containing hydrogen is used. The reducing agent supplier 142 has a general structure and therefore a detail thereof will not be illustrated. The reducing agent supplier 142 is configured to have a device for supplying the hydrogen gas, and therefore its detail is not shown. For example, the reducing agent supplier 142 is configured to include a hydrogen gas tank for storing the hydrogen gas and a pressure control valve for controlling a supply pressure of the hydrogen gas or a valve opening degree control valve for controlling the flow rate of the hydrogen gas. Alternatively, the reducing agent supplier 142 may be configured to include a supply infrastructure for supplying a hydrocarbon based material such as a natural gas, a plunger pump, a flow rate control member, and a hydrogen production/supply system for generating the hydrogen gas through a steam reforming reaction or the like using the hydrocarbon based material and supplying the hydrogen gas, as a raw material.

The reducing agent discharge path 112E is connected to the reducing agent discharge nozzle 102E. A valve 139V is provided in the reducing agent discharge path 112E. A gas-liquid separator 127 is provided downstream of the valve 139 in a flow direction of the reducing agent. A combustor 125 capable of combusting a gas in the reducing agent discharge path 112E is provided at an atmosphere open end of the reducing agent discharge path 112E located downstream of the gas-liquid separator 127, i.e., at a downstream end of the reducing agent discharge path 112E in the flow direction of the reducing agent. In such a configuration, the gas-liquid separator 127 separates the fluid in the reducing agent discharge path 112E into a gas phase and a liquid phase, and can flow only the gas phase to the combustor 125. Further, when the gas phase is combustible, the combustor 125 is capable of combusting it.

The combustor 125 is a general burner. Alternatively, the downstream end of the reducing agent discharge path 112E may be connectable to the burner of the hydrogen generating apparatus in a case where the hydrogen generating apparatus is provided in the reducing agent supplier 142. This can simplify the configuration of the PEFC system.

The oxidizing agent supply path 113I is connected to the oxidizing agent supply nozzle 103I and is connected to the oxidizing agent supplier 143. A valve 132V is provided in the reducing agent supply path 113I.

As the oxidizing agent, an oxygen gas containing oxygen is typically used. In this embodiment, air is used. As the oxidizing agent supplier 143, a known structure is used, and therefore a detail description thereof will not be given. The oxidizing agent supplier 143 is configured to include an air blower such as a sirocco fan, a filter for removing a sulfur component from air and a humidifier for humidifying the oxidizing agent while preheating the oxidizing agent.

The oxidizing agent discharge path 113E is connected to the oxidizing agent discharge nozzle 103E. A valve 133V is provided in the oxidizing agent discharge path 113E. The downstream end of the oxidizing agent discharge path 113E is open to atmosphere in a flow direction of the oxidizing agent and is provided with a discharge port (not shown) through which an excess oxidizing agent is released to atmosphere.

The oxidizing agent discharge path 113E and the oxidizing agent supply path 113I can be configured to, at a part thereof, exchange water and heat from the oxidizing agent discharge path 113E side to the oxidizing agent supply path 113I, by way of a total enthalpy heat exchange humidifier. This can improve energy utilization efficiency in the PEFC system.

The water supply path 114I is connected to the water supply nozzle 104I and is connected to the water supplier 144. The water supplier 144 has a general structure and therefore is not illustrated. The water supplier 144 is configured to include a water line infrastructure, a purifier for purifying the water supplied from the water line infrastructure, a pump for feeding water to the water supply path 114I, and a heat exchanger for controlling a water temperature.

The water discharge path 114E is connected to the water discharge nozzle 104E. The water discharge path 114E has a general structure and therefore is not illustrated. The water discharge path 114E is connected to a heat exchanger of the water supplier 144. The water is circulated in the water supply path 114I, the PEFC stack 99, and the water discharge path 114E.

In this embodiment, the PEFC system includes a supply side connecting passage (first supply side connecting passage) 121 connecting the oxidizing agent supply path 113I to the water discharge path 114E, and a valve 131V provided in the supply side connecting passage 121. A valve 132V is provided in a portion of the oxidizing agent supply path 113I which is located upstream of the supply side connecting passage 121 in the flow direction of the oxidizing agent. Thus, by closing the valve 132V and opening the valve 131V, the water in the water discharge path 114E can be supplied to the oxidizing agent supply path 113I through the supply side connecting passage 121, according to a pressure difference between the water pressure of the water discharge path 114E and the pressure of the interior of the oxidizing agent supply path 113I. Furthermore, the water in the water discharge path 114 can be supplied to the oxidizing agent supply manifold 93I (see Figs. 1 and 4), according to the passage resistance of the interior of the oxidizing agent supply nozzle 103I, the passage resistance of the interior of the PEFC stack 99 and the water pressure of the water discharge path 114E.

A residual gas treatment system 151 is provided in the oxidizing agent discharge path 113E.

The residual gas treatment system 151 is configured to include the combustor 125, a discharge side connecting passage 122 connecting the reducing agent discharge path 112E to the oxidizing agent discharge path 113E, a valve 134V provided in the discharge side connecting passage 122, a gas-liquid separator 126 provided in the discharge side connecting passage 122, and a valve 133V provided in a portion of the oxidizing agent discharge path 113E which is located downstream of the discharge side connecting passage 122 in the flow direction of the oxidizing agent.

The discharge side connecting passage 122 is connected to a portion of the reducing agent discharge path 112E which is located upstream of the combustor 125 in the flow direction of the reducing agent.

The gas-liquid separator 126 may be configured to separate an inflowing fluid into a gas-phase component (gas component) and a liquid-phase component (liquid component) and to flow only the gas-phase component to a downstream side. Herein, a general drain tank is used. An inlet/outlet of the discharge side connecting passage 122 is provided at the upper side of the tank and a water storing region is provided at the lower side of the tank.

By closing the valve 133V and by opening the valve 134V in the residual gas treatment system 151, the fluid in the oxidizing agent discharge path 113E can be introduced into the discharge side connecting passage 122. In addition, the gas-liquid separator 126 can separate the fluid into the gas-phase and the liquid-phase and discharge only the gas-phase to the reducing agent discharge path 112E. Further, when the gas-phase is combustible, the combustor 125 is capable of combusting it.

A controller 300 is configured to include an input unit 301 constituted by a key board, a touch panel, etc, a memory unit 302 constituted by a memory or the like, a time measuring unit 303 constituted by a timer or the like, and a control unit 304 constituted by a CPU, MPU, or the like. The controller 300 is configured to control the reducing agent supplier 142, the oxidizing agent supplier 143, the water supplier 144, the combustor 125, and the valves 131,132,133, and 134.

As used herein, the term "controller" encompasses not only a single controller but also a controller group in which a plurality of controllers cooperate to execute control. Therefore, the controller 300 need not be constituted by a single controller but may be a plurality of controllers which are distributed and are configured to cooperate with each other to control the suppliers and the valves. For example, the input unit 303 may be constituted by a mobile device having a communication function. Alternatively, the control unit 304 may be provided for each of the suppliers 142,143, and 144.

Subsequently, the supply start operation of the oxidizing agent in the start-up operation of the PEFC system of this embodiment will be described.

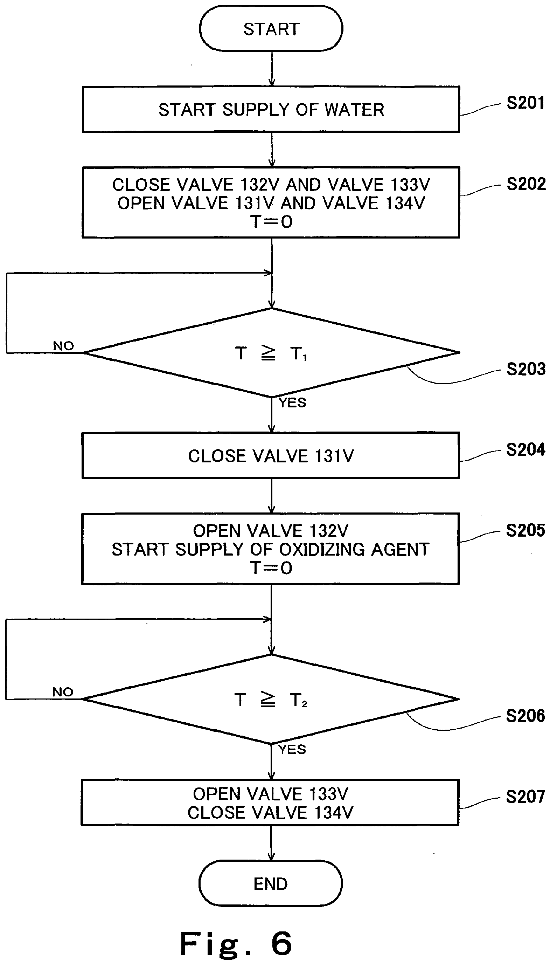

Fig. 6 is a flowchart showing an example of the supply start operation of the oxidizing agent in the start-up operation of the PEFC system of Fig. 5. The operation is carried out under control of the controller 300.

The supply of the oxidizing agent to the PEFC stack 99 is started, upon reception of a command signal in the controller 304. Typically, the command signal is suitably output by an ON-operation of a start-up switch of the PEFC system, prediction of generation of an electric power load, etc, and is input to the control unit 304, although not shown.

As shown in Fig. 6, after the start-up, initially, in step S201, the water supplier 144 supplies water to the PEFC stack 99 by way of the water supply path 114I and through the water supply nozzle 104I. The water discharged from the water discharge nozzle 104E flows to the water discharge path 114E. At this time, the valve 131V is closed.

Note that the water supply may be carried out irrespective of the command signal for starting the supply of the oxidizing agent. That is, preheated water has been in some cases supplied to the PEFC stack 99 in order to warm up the PEFC stack 99 at the reception of the command signal for starting the supply of the oxidizing agent.

In step (water layer forming step) S202, the valve 132V and the valve 133V are closed and the valve 131V and the valve 134V are opened. And, the time measuring unit 303 starts to measure the time T.

In the water layer forming step S202, the oxidizing agent supply path 113I is open to atmosphere by way of the PEFC stack 99, the oxidizing agent discharge path 113E, the discharge side connecting passage 122, the gas-liquid separator 126, the reducing agent discharge path 112E and the combustor 125, and the valve 132V is closed. Therefore, the internal pressure of the oxidizing agent supply path 113I is substantially equal to an atmospheric pressure. The water supply pressure of the water supplier 144 is reduced due to a pressure loss of the water passages 26 and 36 of the PEFC stack 99, while the water pressure of the water discharge path 114E is slightly higher than the atmospheric pressure. To be specific, the water pressure is higher than the atmospheric pressure by 0.5 to 1kPa. Therefore, the water is supplied from the water discharge path 114E to the oxidizing agent supply path 113I via the supply side connecting passage 121. The water flows into the oxidizing agent supply manifold 93I (see Figs. 1 to 4) through the oxidizing agent supply path 113I by way of the oxidizing agent supply nozzle 103I.

In this case, the water pressure is insufficient, so that the water cannot flow from the oxidizing agent supply manifold 93I through the oxidizing agent passage 31. Or, time is needed for the water to flow from the oxidizing agent supply manifold 93I through the oxidizing agent passage 31. Thus, since the water is not easily drained from the oxidizing agent supply manifold 93I, the oxidizing agent supply manifold 93I is flooded before it flows to the discharge end 31E of the oxidizing agent passage 31. In other words, the water layer is formed such that the oxidizing agent supply manifold 93I is clogged with the water.

The residual gas treatment system 151 is configured to guide the residual gas in the oxidizing agent passage 31 to the combustor 125. Therefore, by supplying the water, the residual gas in the oxidizing agent passage 31, the residual gas in the oxidizing agent discharge manifold 93E, and the residual gas in the oxidizing agent discharge path 113E are pushed by the residual gas in the oxidizing agent supply path 113I and the residual gas in the oxidizing agent supply manifold 93I and are guided to the combustor 125 by way of the discharge side connecting passage 122, the reducing agent discharge path 112E and the gas-liquid separator 126.

In a case where the residual gas in the oxidizing agent passage 31 contains a combustible component such as a reducing agent, a natural gas or a town gas, the combustor 125 is operated (combustion step). Since the combustible residual gas can be combusted in this way, the PEFC system can be operated more safely.

In step S203, step (water layer forming step) S202 continues until the time T reaches a predetermined water supply time (first water supply time) T₁.

When the time T reaches the predetermined water supply time (first water supply time) T₁, the process goes to step S204, in which the valve 131V is closed. Thus, the supply of water to the oxidizing agent supply path 113I terminates.

The water supply time T₁ is set to time at which the amount of water which has flowed through the supply side connecting passage 121 reaches a total volume (water supply volume) of the volume of the oxidizing agent supply manifold 93I and the volume of a portion of the oxidizing agent supply path 113I which is located between the oxidizing agent supply nozzle 103I and the supply side connecting passage 121. To be specific, the water supply time T₁ can be estimated based on the water supply volume, the passage cross-sectional area of the supply side connecting passage 121 and a pressure difference between the water discharge path 114E and the oxidizing agent supply path 113I, from fluid dynamics knowledge.

Alternatively, by repeating a test using the PEFC system, the time at which the oxidizing agent supply manifold 93I is flooded is found based on an experience and is determined as the water supply time T₁. This makes it possible to make the oxidizing agent supply manifold 93I flooded.

Alternatively, a flow meter may be provided in the supply side connecting passage 121 instead of the time measuring unit 303, and the control unit 304 may be configured to determine that the flow rate has reached the water supply volume. Thus, the process goes to step S204.

Therefore, the water supply volume can be made smaller as the supply side connecting passage 121 and the valve 132V are closer to the oxidizing agent supply nozzle 103I, so that the water supply time T₁ can be reduced. That is, as the supply side connecting passage 121 and the valve 132V are closer to the oxidizing agent supply nozzle 103I, the PEFC system can be started-up more quickly.

In step (supply step) S205 after step S204, the valve 132V is opened and the oxidizing agent supplier 143 supplies the oxidizing agent to the oxidizing agent supply path 113I. And, the time measuring unit 303 starts measuring the time T. Thereby, the water layer clogging the oxidizing agent supply manifold 93I is pushed by the oxidizing agent and is pushed out to the gas-liquid separator 126 sequentially by way of the oxidizing agent passage 31, the oxidizing agent discharge manifold 93E, the oxidizing agent discharge path 113E and the discharge side connecting passage 122. Since the water layer intervenes between the residual gas and the oxidizing agent, no interface is formed between the residual gas and the oxidizing agent. Therefore, a combustion reaction which would occur because of mixing between the residual gas and the oxidizing agent in the oxidizing agent passage 31 can be prevented, and damage to the MEA5 can be prevented.

The gas-liquid separator 126 separates the water in the liquid phase from the residual gas and the oxidizing agent, and flows only the residual gas in the gas phase and the oxidizing agent to downstream side (separating step). This enables the water supplier 144 to re-use the water recovered in the gas-liquid separator 126. Therefore, water supply from outside the PEFC system can be saved. In addition, the flow of water into the combustor 125 can be prevented.

The residual gas which has been pushed out together with the water layer by supplying the oxidizing agent is guided from the gas-liquid separator 126 to the combustor 125 by way of the reducing agent discharge path 112E. In a case where the residual gas contains a combustible component such as a reducing agent, a natural gas or a town gas, the combustor 125 is operated (combustion step). Since the combustible residual gas can be combusted in this way, the PEFC system can be operated more safely.

In step S206, step (supply step) S205 continues until the time T reaches a predetermined gas discharge time T₂.

When the time T reaches the predetermined gas discharge time T₂, the process goes to step S207, in which the valve 133V is opened and the valve 134V is closed. Thus, gas discharge to the combustor 12 terminates. That is, the supply of the oxidizing agent continues but the supply start operation of the oxidizing agent of the present invention terminates.

The gas discharge time T₂ is set to time at which the flow rate of the gas which has flowed through the discharge side connecting passage 122, or the flow rate of the oxidizing agent supplied from the oxidizing agent supplier 143 reaches a total volume (gas discharge volume) of the volume of the oxidizing agent passage 31, the volume of the oxidizing agent discharge manifold 93E, and the volume of a portion of the oxidizing agent discharge path 113E which is located between the oxidizing agent discharge nozzle 103E and the discharge side connecting passage 122. To be specific, the gas discharge time T₂ can be estimated from the gas discharge volume and the flow rate of the oxidizing agent supplier 143 per time. Alternatively, by repeating a test using the PEFC system, T₂ can be decided based on an experience.

Alternatively, a flow meter may be provided in the discharge side connecting passage 122 instead of the time measuring unit 303, and the control unit 304 may determine that the flow rate has reached the gas discharge volume. Thus, the process goes to step S207.

The gas discharge volume can be made smaller as the discharge side connecting passage 122 and the valve 133V are closer to the oxidizing agent discharge nozzle 103E, so that the gas discharge time T₂ can be reduced. That is, the PEFC system can be started-up more quickly as the discharge side connecting passage 122 and the valve 133 are closer to the oxidizing agent discharge nozzle 103E.

In the operation method of the PEFC system of this embodiment, the water layer clogging the oxidizing agent supply manifold 93I can push out the residual gas while isolating the oxidizing agent from the residual gas in the oxidizing agent passage 31. Therefore, in accordance with the operation method, it is possible to prevent a combustion reaction due to mixing between the residual gas and the oxidizing agent in the oxidizing agent passage 31, and to prevent damage to the MEA 5. That is, the operation method of this embodiment can effectively prevent local abnormal combustion in the oxidizing agent passage 31 which is associated with the start of supply of the oxidizing agent in the case where entry of the combustible component, especially the reducing agent into the oxidizing agent passage 31 may occur in the power generation stop state of the PEFC stack 99. For example, the operation method makes it possible to effectively perform the start-up operation of the PEFC system under the condition in which the combustible component stays in the reducing agent passage 21 in the power generation stop state of the PEFC stack 99. In particular, the operation method makes it possible to effectively perform the start-up operation of the PEFC system in a case where the reducing agent passage 21 is closed with the reducing agent staying therein in the power generation stop operation of the PEFC stack 99.

The operation method of the PEFC system of this embodiment can omit purging of the oxidizing agent passage 31 with water or an inert gas in the start-up operation of the PEFC system. That is, the PEFC system can be started-up quickly. In addition, the inert gas or water for the purging may be omitted. As a result, the PEFC system can be reduced in size and weight.

Furthermore, in the operation method of the PEFC system of this embodiment, when the residual gas in the oxidizing agent passage 31 is an inert gas such as a nitrogen gas or a natural gas, there is no possibility that the oxidizing agent is mixed into the residual gas in the reducing agent passage 21. Therefore, in contrast to Embodiment 3 described later, the supply of water to the reducing agent manifold 92I can omitted, and as a result, the PEFC system can be started-up more quickly.

### (Embodiment 2)

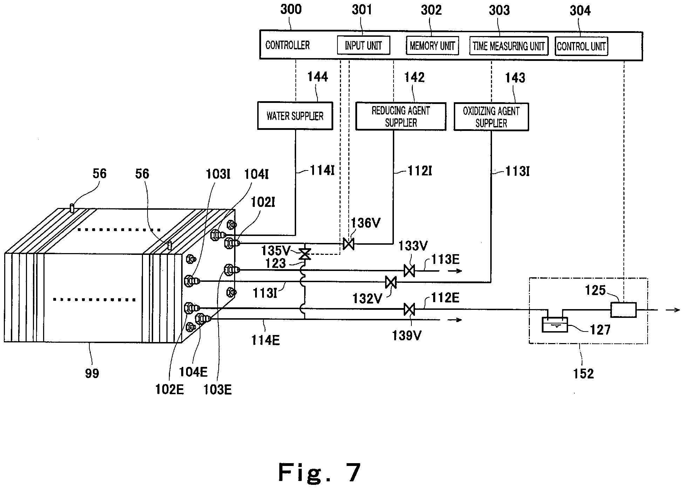

Fig. 7 is a view schematically showing a configuration of a PEFC system according to Embodiment 2.

As shown in Fig. 7, the PEFC system of this embodiment includes, instead of the supply side connecting passage 121 and the valve 131V of Embodiment 1, a second supply side connecting passage 123 provided in a location between the reducing agent supply path 112I and the water discharge path 114E, and a valve 135V provided in the second supply side connecting passage 123. Accordingly, a residual gas treatment system 152 is provided in the reducing agent discharge path 112E instead of the residual gas treatment system 151 of Embodiment 1. Therefore, in Fig. 7, the same or corresponding parts in Fig. 5 are designated by the same reference numerals as those in Fig. 5 and will not be described, and only the difference will be described.

The PEFC system of this embodiment includes the second supply side connecting passage 123 connecting the reducing agent supply path 112I to the water discharge path 114E and the valve 135V provided in the second supply side connecting passage 123. In addition, a valve 136V is provided in a portion of the reducing agent supply path 112I which is located upstream of the second supply side connecting passage 123 in the flow direction of the reducing agent. Thus, by closing the valve 136V and opening the valve 135V, the water in the water discharge path 114E can be supplied to the reducing agent supply path 112I through the second supply side connecting passage 123, according to a pressure difference between the water pressure of the water discharge path 114E and the pressure of the interior of the reducing agent supply path 112I. Furthermore, the water in the water discharge path 114 can be supplied to the interior of the reducing agent supply manifold 92I (see Figs. 1 and 4), according to the passage resistance of the interior of the reducing agent supply nozzle 102I, the passage resistance of the interior of the PEFC stack 99 and the water pressure of the water discharge path 114E.

The residual gas treatment system 152 is configured to include the combustor 125, and a gas-liquid separator 127 provided in the reducing agent discharge path 112E.

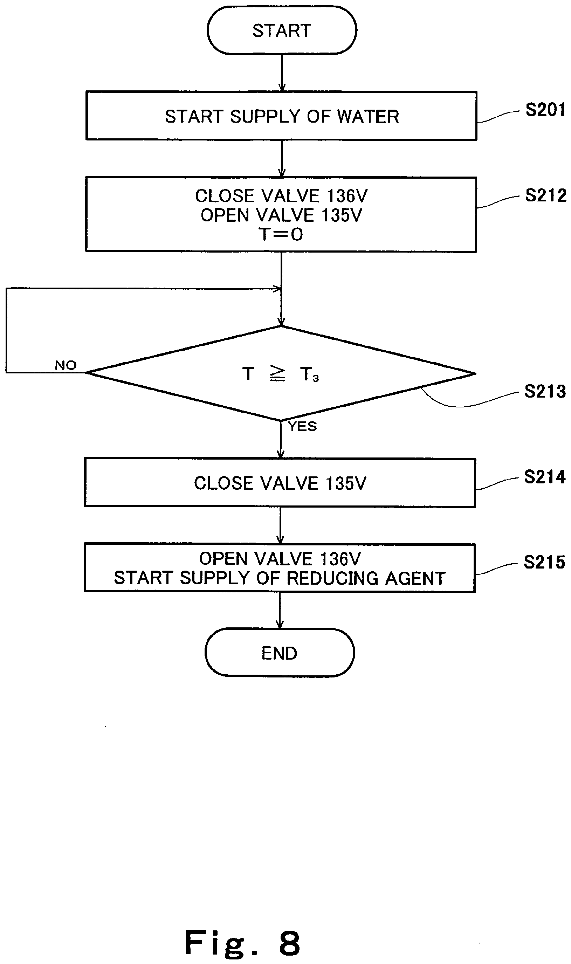

Fig. 8 is a flowchart showing an example of the supply start operation of the reducing agent in the start-up operation of the PEFC system of Fig. 7. In Fig. 8, the same or corresponding parts in Fig. 6 are designated by the same reference numerals as those in Fig. 6 and will not be described, and only the difference will be described.

As in Embodiment 1, initially, in step S201, the water is supplied from the water supplier 144 to the PEFC stack 99. Thereafter, in step (water layer forming step) S212, the valve 136V is closed and the valve 135V is opened. And, the time measuring unit 303 starts measuring the time T.

In the water layer forming step S212, the reducing agent supply path 112I is open to atmosphere by way of the PEFC stack 99, the reducing agent discharge path 112E, the gas-liquid separator 127, and the combustor 125, the internal pressure of the reducing agent supply path 112I is substantially equal to an atmospheric pressure. The water supply pressure of the water supplier 144 is reduced due to a pressure loss of the water passages 26 and 36 of the PEFC stack 99, while the water pressure of the water discharge path 114E is slightly higher than the atmospheric pressure. To be specific, the water pressure is higher than the atmospheric pressure by 0.5 to 1kPa. Therefore, the water is supplied from the water discharge path 114E to the reducing agent supply path 112I via the supply side connecting passage 123. The water flows from the reducing agent supply path 112I into the reducing agent supply manifold 92I (see Figs. 1 to 4) by way of the reducing agent supply nozzle 102I.

In this case, the water pressure is insufficient, so that the water cannot flow from the reducing agent supply manifold 92I through the reducing agent passage 21. Or, time is needed for the water to flow from the reducing agent supply manifold 92I through the reducing agent passage 21. Thus, since the water is not easily drained from the reducing agent supply manifold 92I, the reducing agent supply manifold 92I is flooded before the water flows to a discharge end 21E of the reducing agent passage 21. In other words, the water layer is formed such that the reducing agent supply manifold 92I is clogged with water.

By supplying the water, the residual gas in the reducing agent passage 21, the residual gas in the reducing agent discharge manifold 92E and the residual gas in the reducing agent discharge path 112E are pushed by the residual gas in the reducing agent supply path 112I and the residual gas in the reducing agent supply manifold 92I and are guided to the combustor 125 by way of the reducing agent discharge path 112E and the gas-liquid separator 127.

In a case where the residual gas in the reducing agent passage 21 contains a combustible component such as a reducing agent, a natural gas or a town gas, the combustor 125 is operated (combustion step). Since the combustible residual gas can be combusted in this way, the PEFC system can be operated more safely.

In step S213, step (water layer forming step) S212 continues until the time T reaches a predetermined second water supply time T₃.

When the time T reaches the predetermined second water supply time T₃, the process goes to step S214, in which the valve 135V is closed. Thus, the supply of water to the reducing agent supply path 112I terminates.

The second water supply time T₃ is set to time at which the amount of water which has flowed through the second supply side connecting passage 123 reaches a total volume (second water supply volume) of the volume of the reducing agent supply manifold 92I and the volume of a portion of the reducing agent supply path 112I which is located between the reducing agent supply nozzle 102I and the second supply side connecting passage 123. To be specific, the second water supply time T₂ can be estimated based on the second water supply volume, the passage cross-sectional area of the second supply side connecting passage 123 and a pressure difference between the water discharge path 114E and the reducing agent supply path 112I, from fluid dynamics knowledge.

Alternatively, by repeating a test using the PEFC system, the time at which the reducing agent supply manifold 92I is flooded is found from an experience and is determined as the second water supply time T₃. This makes it possible to make the reducing agent supply manifold 92I flooded.

Alternatively, a flow meter may be provided in the second supply side connecting passage 123 instead of the time measuring unit 303, and the control unit 304 may be configured to determine that the flow rate has reached the second water supply volume. Thus, the process goes to step S214.

Therefore, the second water supply volume can be made smaller as the second supply side connecting passage 123 and the valve 136V are closer to the reducing agent supply nozzle 102I, so that the second water supply time T₃ can be reduced. That is, as the second supply side connecting passage 123 and the valve 136V are closer to the reducing agent discharge nozzle 102I, the PEFC system can be started-up more quickly.

In step (supply step) S215 after step S214, the valve 136V is opened and the reducing agent supplier 142 supplies the reducing agent to the reducing agent supply path 112I. Thereby, the water layer clogging the reducing agent supply manifold 92I is pushed by the reducing agent and is pushed out to the gas-liquid separator 127 sequentially by way of the reducing agent passage 21, the reducing agent discharge manifold 92E, and the reducing agent discharge path 112E. Since the water layer intervenes between the residual gas and the reducing agent, no interface is formed between the residual gas and the reducing agent.

The gas-liquid separator 127 separates the water in the liquid phase from the residual gas and the oxidizing agent, and flows only the residual gas in the gas phase and the oxidizing agent to downstream side (separating step). This enables the water supplier 144 to re-use the water recovered in the gas-liquid separator 127. Therefore, the water supply from outside the PEFC system can be saved. In addition, the flow of water into the combustor 125 can be prevented.

The residual gas which has been pushed out together with the water layer by the reducing agent is guided from the gas-liquid separator 126 to the combustor 125. In a case where the residual gas contains a combustible component such as a reducing agent, a natural gas or a town gas, the combustor 125 is operated (combustion step). Since the combustible residual gas can be combusted in this way, the PEFC system can be operated more safely.

At the time point when the discharging of the residual gas to the combustor 125 is completed in step S215, the supply start operation of the reducing agent of the present invention terminates. The supply of the reducing agent continues.

In the operation method of the PEFC system of this embodiment, the water layer clogging the reducing agent supply manifold 92I can push out the residual gas while isolating the reducing agent from the residual gas in the reducing agent passage 21. Therefore, in accordance with the operation method, it is possible to prevent a combustion reaction which would occur due to mixing between the residual gas and the reducing agent in the reducing agent passage 21, and to prevent damage to the MEA5. That is, the operation method can effectively prevent local abnormal combustion in the reducing agent passage 21 which is associated with the start of supply of the reducing agent in the case where entry of the oxidizing agent into the reducing agent passage 21 occurs in the power generation stop state of the PEFC stack 99. For example, the operation method makes it possible to effectively perform the start-up operation of the PEFC system under the condition in which the oxidizing agent stays in the oxidizing agent passage 31 in the power generation stop state of the PEFC stack 99. In particular, the operation method makes it possible to effectively perform the start-up operation of the PEFC system in a case where the oxidizing agent passage 31 is closed with the oxidizing agent staying therein in the power generation stop operation of the PEFC stack 99, or the oxidizing agent passage 31 is open to atmosphere.

The operation method of the PEFC system of this embodiment can omit purging of the reducing agent passage 21 with water or an inert gas in the start-up operation of the PEFC system. That is, the PEFC can be started-up quickly. In addition, the inert gas or water for the purging may be omitted. Therefore, the PEFC system can be reduced in size and weight.

Furthermore, in the operation method of the PEFC system of this embodiment, when the residual gas in the reducing agent passage 21 is an inert gas such as a nitrogen gas or a natural gas (which does not cause a combustion reaction in the catalyst layer if the inert gas coexists with oxygen under an operating temperature (30 to 90 degrees centigrade)), there is no possibility that the reducing agent is mixed into the residual gas in the oxidizing agent passage 31. Therefore, in contrast to Embodiment 3 described later, the supply of water into the oxidizing agent manifold 93I can omitted, and as a result, the PEFC system can be started-up more quickly.

### (Embodiment 3)

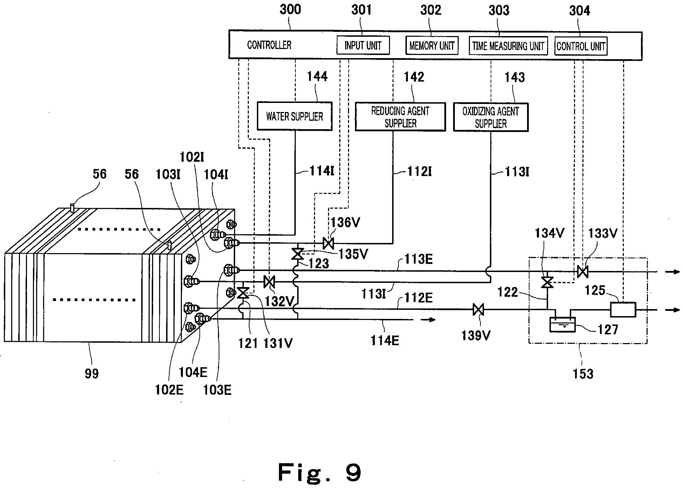

Fig. 9 is a view schematically showing a configuration of a PEFC system according to Embodiment 3.

As shown in Fig. 9, the PEFC system of this embodiment has a configuration including both Embodiment 1 and Embodiment 2. Therefore, in Fig. 9, the same or corresponding parts in Figs. 7 and 5 are designated by the same reference numerals as those in Figs. 7 and 5 and will not be described, but only the difference will be described.

The PEFC system of this embodiment is configured to include a residual gas treatment system 153 which is a modification of the residual gas treatment system 151 of Embodiment 1, and a gas-liquid separator 127 instead of the gas-liquid separator 126. The gas-liquid separator 127 is capable of separating a fluid in the oxidizing agent discharge path 113E and a fluid in the reducing agent discharge path 112E into a gas phase and a liquid phase and of flowing only the gas phase to the combustor 125. In addition, when the gas-phase is combustible, the combustor 125 is capable of combusting it.

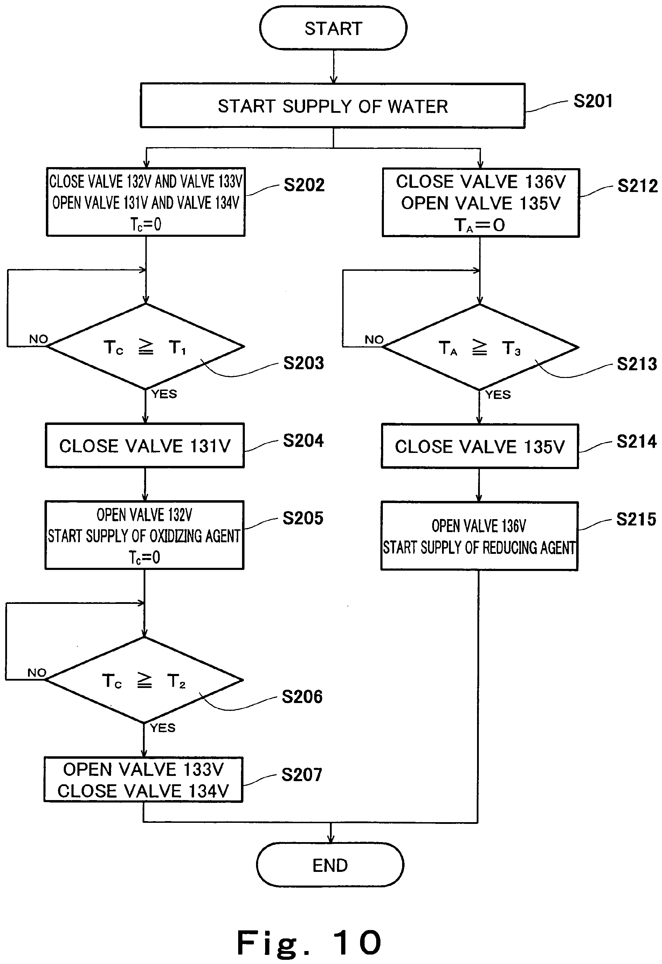

Fig. 10 is a flowchart showing an example of the supply start operation of the reducing agent and the oxidizing agent in the start-up operation of the PEFC system of Fig. 9. In Fig.10, the same or corresponding steps in Figs. 6 and 8 are designated by the same reference numerals as those in Figs. 6 and 8 and will not be described, but only the difference will be described.

As in Embodiment 1 and Embodiment 2, initially, in step S201 (water layer forming step), the water supplier 144 supplies water to the PEFC stack 99. After that, the operation in Embodiment 1 and the operation in Embodiment 2 are performed concurrently. The time measuring unit 303 is configured to measure at least two times concurrently. To be specific, in the example of Fig.10, the time measuring unit 303 is configured to measure time TA and TC. The time TC corresponds to the time T in Embodiment 1 and the time TA corresponds to the time T in Embodiment 2. Thus, the operation of Embodiment 1 and the operation of Embodiment 2 can be carried out concurrently.

In the operation method of the PEFC system of this embodiment, the residual gas can be pushed out while isolating the oxidizing agent and the residual gas in the oxidizing agent passage 31 from each other by the water layer clogging the oxidizing agent supply manifold 93I. In addition, the residual gas can be pushed out while isolating the reducing agent and the residual gas in the reducing agent passage 21 from each other by the water layer clogging the reducing agent supply manifold 92I. In other words, since the water layer intervenes between the residual gas and the oxidizing agent, no interface is formed between the residual gas and the reducing agent and between the residual gas and the oxidizing agent.

Therefore, in accordance with the operation method, a combustion reaction which would occur because of mixing between the residual gas in the reducing agent passage 21 and the oxidizing agent passage 31 and the reducing agent and the oxidizing agent can be prevented, and damage to the MEA 5 can be prevented. That is, in a case where there is a possibility that the oxidizing agent is mixed into the residual gas in the reducing agent passage 21 and the reducing agent is mixed into the residual gas in the oxidizing agent passage 31, the damage to the MEA 5 in the start-up operation of the PEFC system can be damaged more surely. For example, the operation method makes it possible to effectively perform the start-up operation of the PEFC system under the condition in which the oxidizing agent stays in the oxidizing agent passage 31 and the reducing agent stays in the reducing agent passage, in the power generation stop state of the PEFC system. In particularly, the operation method makes it possible to effectively perform the start-up operation of the PEFC system under the condition in which the reducing agent passage 21 is closed with the reducing agent staying therein and the oxidizing agent passage 31 is closed with the oxidizing agent staying therein, in the power generation stop operation of the PEFC system.

The operation method of the PEFC system of this embodiment can omit purging of the reducing agent passage 21 and the oxidizing agent passage 31 with water or an inert gas in the start-up operation of the PEFC system. That is, the PEFC system can be started-up quickly. In addition, the inert gas or water for the purging may be omitted. Therefore, the PEFC system can be reduced in size and weight.

The embodiments of the present invention have been described so far. The path through which the water is supplied to the oxidizing agent supply path 113I or the reducing agent supply path 112I in the water layer forming steps S202 and S212 may be formed by any paths other than the water discharge path 114E. For example, in Embodiment 1, the supply side connecting passage 121 may be configured to connect the water supply path 114I to the oxidizing agent supply path 113I. In this case, the valve 131V may serve as a pressure control valve or a valve opening degree control valve and may be configured to control the water supply pressure of the water supplied to the oxidizing agent supply path 113I or the valve opening degree. In this way, the water supplier 144 can be integrally provided by using the cooling water supplier of the PEFC stack 99, in the above embodiments as well as this embodiment. That is, the operation method of the PEFC system of the present invention can be made efficient. In addition, the configuration of the PEFC system of the present invention can be simplified.

In addition to the above, modifications 1 to 3 may be applied to Embodiments 1 to 3.

### [Modification 1]

A modification of Embodiment 1 will be described.

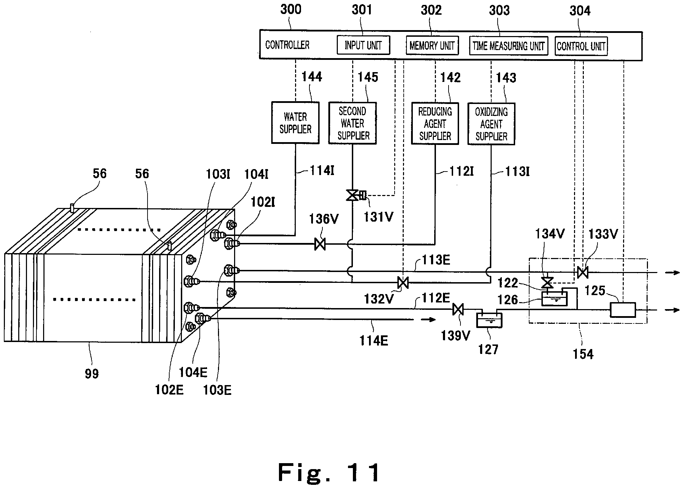

Fig. 11 is a view showing modification of a supply side connecting passage in the PEFC system of Fig. 5.

As shown in Fig. 11, in this modification, a second water supplier 145 is provided separately from the water supplier 144. The supply side connecting passage 121 is configured to connect the second water supplier 145 to the oxidizing agent supply path 113I, and the valve 131V is constituted by a pressure control valve or an opening degree control valve. In this configuration, the control unit 304 controls the valve 131V so that the water supply pressure of the water supplied to the oxidizing agent supply path 113I or the valve opening degree are controlled in the water layer forming step (S202). The water supply pressure or the valve opening degree is pre-input with the input unit 301 and is stored in the memory unit 302. Alternatively, without depending on the control of the control unit 304, a control reference pressure or a valve opening degree may be set in the valve 131V Since the second water supplier 145 is operable independently of the water supplier 144, the operation for supplying the water to the oxidizing agent supply path 113I can be carried out independently of the water supply to the water supply path 114I and the water discharge path 114E. Therefore, in the start-up operation of the PEFC system, the warm-up operation of the PEFC stack 99 and the supply start operation of the oxidizing agent can be independently carried out. As a result, flexibility of the start-up operation of the PEFC system can be improved.

The second water supplier 145 is configured as in the above described water supplier 144. Alternatively, the second water supplier 145 may be a water storage tank disposed in a location higher than the PEFC system, because the water supply pressure may be a water pressure which is about 0.5 to 1kPa higher than an atmospheric pressure. In this case, since the water supply pressure is a water head pressure, the water storage tank may be installed in a location which is 5 cm to 10cm higher than the PEFC stack 99. Since the valve 131V need not be configured to control the pressure or the valve opening degree, a normal on-off valve may be used.

The configuration of the valves 131V, 132V, 133V, 134V, 135V, and 136V may be rational. For example, they may have a configuration as in modification 2 described later.

### [Modification 2]

Modification 2 will be described as modification of Embodiment 1.

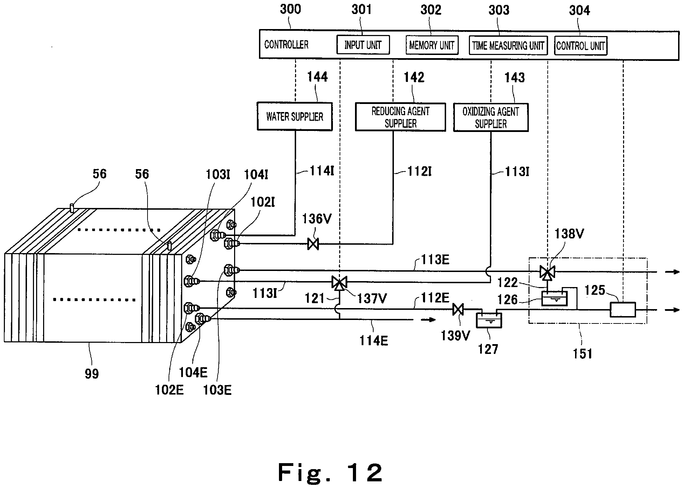

Fig. 12 is a view showing modification of a valve structure in the PEFC system of Fig. 5.

As shown in Fig. 12, the valve 131V and the valve 132V of Fig. 5 may be integrated as a three-way valve 137V Also, the valve 133V and the valve 134V of Fig. 5 may be integrated as a three-way valve 138V

### [Modification 3]

Modification 3 will be described as modification of Embodiment 1.

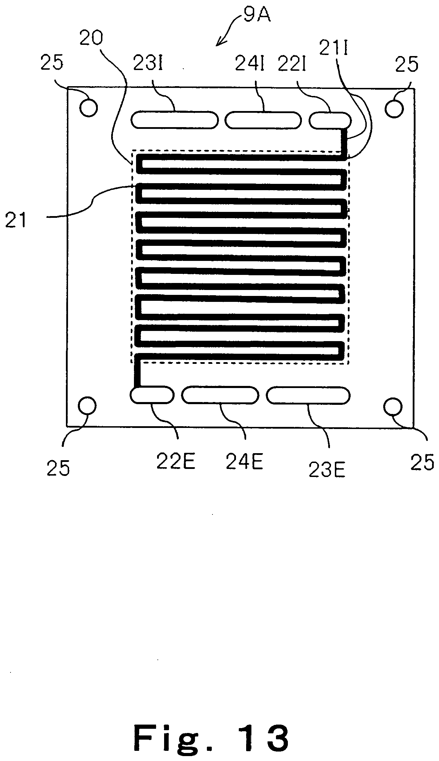

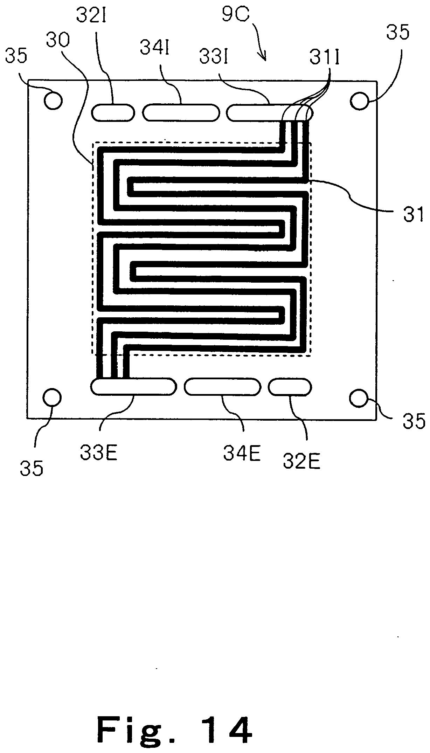

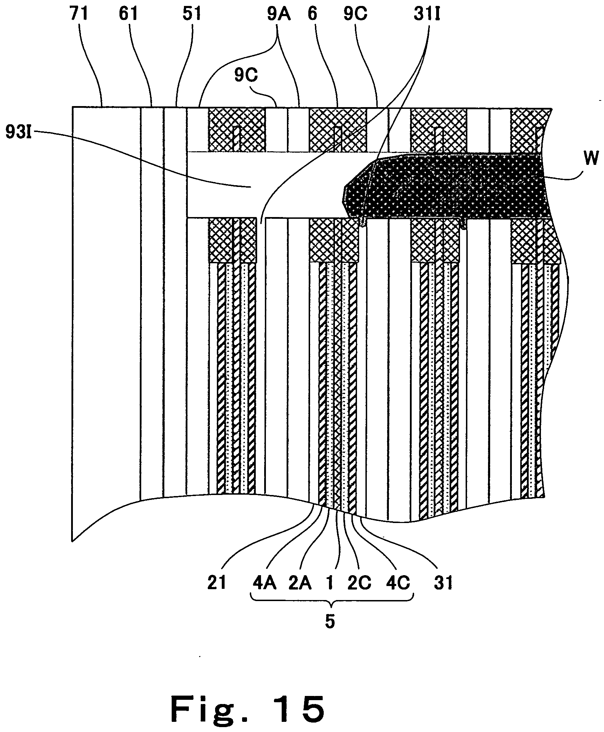

Fig. 13 is a plan view showing an anode separator plate of the PEFC stack of Fig. 1 in modification 3. Fig. 14 is a plan view showing a cathode separator plate of the PEFC stack of Fig. 1 in modification 3. Fig. 15 is a cross-sectional view showing an oxidizing agent supply manifold region of the PEFC stack of Fig. 1 in modification 3, a part of the cross-section being illustrated as enlarged.

As shown in Figs. 13 and 14, in modification 3, the reducing agent supply manifold holes 22I and 32I, the oxidizing agent supply manifold holes 23I and 33I, and the water supply manifold holes 24I an 34I are formed on the upper portion of the separators 9A and 9C. And, the reducing agent supply end 21I or the oxidizing agent supply ends 31I are provided at the lower surface of the reducing agent supply manifold hole 22I or the lower surface of the oxidizing agent supply manifold hole 33I in a gravity direction, respectively.

In this modification, in the water layer forming step (S202) in the above Embodiments 1 to 3 and modification 1, for example, in the oxidizing agent supply manifold 93I, the water sequentially flows through the oxidizing agent supply ends 31I into the associated oxidizing agent passages 31. If the water supply speed is slower, the water is more likely to reach the discharge end 31E in a part of the oxidizing agent passages 31 before the oxidizing agent supply manifold 93I is flooded. It is difficult to cause the oxidizing agent supply manifold 93I to be flooded if the water reaches the discharge end 31E in a part of the oxidizing agent passage 31 before the oxidizing agent supply manifold 93I is flooded.

However, under the water pressure of 0.5 to 1kPa of the water to be supplied actually, the water flows into the oxidizing agent supply manifold 93I while clogging the oxidizing agent supply manifold 93I, i.e., increasing the region which is clogged with the water layer. Therefore, the residual gas can be efficiently pushed to the oxidizing agent gas passage 31 and the oxidizing agent supply manifold 93I can be flooded more smoothly. Whereas the oxidizing agent passage 31 side is described as an example, the same occurs at the reducing agent passage 21 side.

As should be appreciated from the foregoing, the PEFC system of the present invention is capable of forming the water layer so as to close at least one of the reducing agent supply manifold 92I and the oxidizing agent supply manifold 93I. Therefore, the residual gas can be pushed out while isolating the residual gas in at least one of the reducing agent passage 21 and the oxidizing agent passage 31 from at least one of the reducing agent and the oxidizing agent using the water layer, by supplying the reducing and the oxidizing agent. Therefore, a combustion reaction which would occur because of mixing between the residual gas in at least one of the reducing agent passage 21 and the oxidizing agent passage 31 and at least one of the reducing agent and the oxidizing agent can be prevented, and damage to the MEA 5 can be prevented. In addition, the time required to purge the residual gas can be reduced as compared to a case where the residual gas in at least one of the reducing agent passage 21 and the oxidizing agent passage 31 is purged using at least one of the oxidizing agent and the reducing agent for purging. Furthermore, the amount of water used is smaller as compared to a case where the residual gas in at least one of the reducing agent passage 21 and the oxidizing agent passage 31 is purged with the water, the amount of water and the time required to purge the residual gas can be reduced. As a result, the PEFC system can be quickly started-up.

Thus far, the embodiments of the present invention have been described in detail, but the present invention is not limited to the above embodiments and modifications.

For example, in the above embodiments, the internal manifold type PEFC stack 99 is used, but the present invention is applicable in the same manner to a structure (so-called external manifold type structure) in which the manifolds 92I, 93I, 94I, 92E, 93E, and 94E are formed by members separate from the PEFC stack 99.

The present invention can be practiced by forming the water layer so as to clog at least one of at least a portion of the reducing agent supply path 112I which is located upstream of the reducing agent supply end 21I in the flow direction of the reducing agent and at least a portion of the oxidizing agent supply path 113I which is located upstream of the oxidizing agent supply end 31I in the flow direction of the oxidizing agent by supplying the water from the water supplier before starting the supply of at least one of the reducing agent and the oxidizing agent in the supply start operation of at least one of the reducing agent and the oxidizing agent.

That is, the location where the water layer is formed is not limited to the reducing agent supply manifold 92I and the oxidizing agent supply manifold 93I. The location where the water layer at the reducing agent side is formed is not limited to the reducing agent supply manifold 92I. For example, irrespective of the presence/absence of the reducing agent supply manifold 92I, a valve may define the reducing agent supply path 112I and the water layer may be formed in a location upstream of the valve. The location where the water layer at the oxidizing agent side is formed may be determined in the same manner.

The passage shape of the reducing agent supply path 112I is different depending on the configuration of the PEFC system. Therefore, a passage having a shape for allowing formation of a sufficient water layer may be formed in at least a portion of the reducing agent supply path 112I in a location upstream of the reducing agent supply manifold 92I, and the water layer may be formed therein. The location where the water layer at the oxidizing agent side is formed may be determined in the same manner.

### INDUSTRICAL APPLICABILITY

The present invention is useful as an operation method of a PEFC system which is capable of omitting purging of a reducing agent passage and an oxidizing agent passage with water or an inert gas in a start-up operation of the PEFC system, and a PEFC system using the operation method.

## Claims

1. A method of operating a fuel cell system including:
a reducing agent supplier (142) for supplying a reducing agent;
an oxidizing agent supplier (143) for supplying an oxidizing agent;
a fuel cell main body including plural cells (10) stacked, the cells (10) being each provided with a reducing agent passage (21) and an oxidizing agent passage (31) which are isolated by an MEA (5) having a polymer electrolyte membrane (1) as a base material;
a reducing agent supply path (112I) to which reducing agent supply ends (21I) which are end portions of reducing agent passages (21) of all of the cells (10) are connected;
an oxidizing agent supply path (113I) to which oxidizing agent supply ends (31I) which are end portions of oxidizing agent passages (31) of all of the cells (10) are connected; and
a water supplier (144) for supplying water to at least one of the reducing agent supply path (1121) and the oxidizing agent supply path (1131); wherein
each of the plural cells (10) includes a pair of separators (9), each of which is provided with a groove-shaped reducing agent passage (21) and a groove-shaped oxidizing agent passage (31),
the reducing agent supply path (112I) includes a pipe member and a reducing agent supply manifold (921),
the oxidizing agent supply path (1131) includes a pipe member and an oxidizing agent supply manifold (931),
a reducing agent discharge path (112E) is connected to a discharge end of the reducing agent passage (21),
an oxidizing agent discharge path (113E) is connected to a discharge end of the oxidizing agent passage (31),
the reducing agent discharge path (112E) includes a pipe member and a reducing agent discharge manifold (92E), and
the oxidizing agent discharge path (113E) includes a pipe member and an oxidizing agent discharge manifold (93E),
**characterized in that** said method comprises:
in a start-up operation of the fuel cell system,
a water layer forming step in which before starting supply of at least one of the reducing agent and the oxidizing agent in a supply start operation of at least one of the reducing agent and the oxidizing agent, the water supplier (144) supplies water to form a water layer so as to clog at least one of at least a portion of the reducing agent supply path (1121) which is located upstream of the reducing agent supply end (21I) in a flow direction of the reducing agent and at least a portion of the oxidizing agent supply path (113I) which is located upstream of the oxidizing agent supply end (31I) in a flow direction of the oxidizing agent,
wherein in the water layer forming step, a water supply pressure and a water supply time of the water supplied from the water supplier (144) are respectively a water supply pressure and a water supply time with which the water does not pass through all of reducing agent passages (21) and all of oxidizing agent passages (31).

2. The method of operating the fuel cell system according to Claim 1, wherein in the water layer forming step, a water supply pressure of the water supplied from the water supplier is lower than a supply pressure of the reducing agent supplied from the reducing agent supplier (142) and a supply pressure of the oxidizing agent supplied from the oxidizing agent supplier (143).

3. The method of operating the fuel cell system according to Claim 1, wherein the fuel cell system further includes a valve (131V-139V) connected to a discharge side of at least one of the reducing agent passage (21) and the oxidizing agent passage (31), and wherein in the water layer forming step, the supply of the water is started in a state where the valve is open, and the valve is closed in at least one of a state where the water has reached all of the reducing agent supply ends (21I) and a state where the water has reached all of the oxidizing agent supply ends (31I) to stop supply of the water.

4. The method of operating the fuel cell system according to Claim 1, wherein the fuel cell system further includes a combustor (125) connected to a discharge side of at least one of the reducing agent passage (21) and the oxidizing agent passage (31); the method further comprising a combustion step, in which in the water layer forming step, the combustor combusts a residual gas discharged from at least one of the reducing agent passage and from the oxidizing agent passage.

5. The method of operating the fuel cell system according to Claim 5, wherein the fuel cell system further includes a gas-liquid separator (126, 127) which is connected to a discharge side of at least one of the reducing agent passage (21) and the oxidizing agent passage (31) and connected to an upstream side of the combustor (125); the method further comprising a separating step, in which in the water layer forming step, the gas-liquid separator separates the residual gas and water discharged from at least one of the reducing agent passage and the oxidizing agent passage and flows only the gas to the combustor.

6. The method of operating the fuel cell system according to Claim 1, wherein
the water supplier (144) is constituted by utilizing a cooling water supplier of the fuel cell stack.

7. The method of operating the fuel cell system according to Claim 1, wherein the water supplier (144) is operable independently of a cooling water supplier of the fuel cell stack.

8. The method of operating the fuel cell system according to Claim 1, wherein
in a state where the residual gas in the reducing agent passage (21) is the reducing agent and the residual gas in the oxidizing agent passage (31) is an inert gas, the water layer forming step is performed only for the oxidizing agent supply path (113I).

9. The method of operating the fuel cell system according to Claim 1, wherein
in a state where the residual gas in the reducing agent passage (21) is an inert gas and the residual gas in the oxidizing agent passage (31) is the oxidizing agent, the water layer forming step is performed only for the reducing agent supply path (112I).

10. The method of operating the fuel cell system according to Claim 1, wherein
in a state where the residual gas in the reducing agent passage (21) is the reducing agent and the residual gas in the oxidizing agent passage (31) is the oxidizing agent, the water layer forming step is performed for both of the reducing agent supply path (112I) and the oxidizing agent supply path (113I).

11. The method of operating the fuel cell system according to Claim 1, wherein the reducing agent supply path (1121) has a reducing agent supply manifold (921) to which the reducing agent supply ends (21I) of all of the cells (10) are connected;
the oxidizing agent supply path has an oxidizing agent supply manifold (931) to which the oxidizing agent supply ends (313) of all of the cells (10) are connected; and wherein
in the water layer forming step, an amount of the water supplied is an amount of the water with which at least one of the reducing agent supply manifold (921) and the oxidizing agent supply manifold (931) is flooded.

12. A fuel cell system comprising:
a reducing agent supplier (142) for supplying a reducing agent;
an oxidizing agent supplier (143) for supplying an oxidizing agent;
a fuel cell main body including plural cells (10) stacked, the cells (10) being each provided with a reducing agent passage (21) and an oxidizing agent passage (31) which are isolated by an MEA (5) having a polymer electrolyte membrane (1) as a base material;
a reducing agent supply path (112I) to which reducing agent supply ends (21I) which are end portions of reducing agent passages (21) of all of the cells (10) are connected;
an oxidizing agent supply path (1131) to which oxidizing agent supply ends (31I) which are end portions of oxidizing agent passages (31) of all of the cells (10) are connected; and
a water supplier (144) for supplying water to at least one of the reducing agent supply path (112I) and the oxidizing agent supply path (1131); and
a controller (300); wherein
each of the plural cells (10) includes a pair of separators (9), each of which is provided with a groove-shaped reducing agent passage (21) and a groove-shaped oxidizing agent passage (31),
the reducing agent supply path (112I) includes a pipe member and a reducing agent supply manifold (92I),
the oxidizing agent supply path (113I) includes a pipe member and an oxidizing agent supply manifold (931),
a reducing agent discharge path (112E) is connected to a discharge end of the reducing agent passage (21),
an oxidizing agent discharge path (113E) is connected to a discharge end of the oxidizing agent passage (31),
the reducing agent discharge path (112E) includes a pipe member and a reducing agent discharge manifold (92E), and
the oxidizing agent discharge path (113E) includes a pipe member and an oxidizing agent discharge manifold (93E),
**characterized in that**
the controller (300) is configured to in a water layer forming step of a start-up operation of the fuel cell system, cause the water supplier (144) to supply water to form a water layer so as to clog at least one of at least a portion of the reducing agent supply path (112I) which is located upstream of the reducing agent supply end (21I) in a flow direction of the reducing agent and at least a portion of the oxidizing agent supply path (113I) which is located upstream of the oxidizing agent supply end (31I) in a flow direction of the oxidizing agent, before starting supply of at least one of the reducing agent and the oxidizing agent in a supply start operation of at least one of the reducing agent and the oxidizing agent,
wherein in the water layer forming step, a water supply pressure and a water supply time of the water supplied from the water supplier (114) are respectively a water supply pressure and a water supply time with which the water does not pass through all of reducing agent passages (21) and all of oxiziding agent passages (31).

13. The fuel cell system according to Claim 12, further comprising:
a combustor (125) connected to a discharge side of at least one of the reducing agent passage (21) and the oxidizing agent passage (31);
wherein the controller (300) is configured to cause the combustor to combust the residual gas discharged from at least one of the reducing agent passage (21) and the oxidizing agent passage (31) in formation of the water layer.

14. The fuel cell system according to Claim 13, further comprising:
a gas-liquid separator (126, 127) which is connected to a discharge side of at least one of the reducing agent passage (21) and the oxidizing agent passage (31);
wherein the controller (300) is configured to cause the gas-liquid separator to separate the residual gas and water discharged from at least one of the reducing agent passage and the oxidizing agent passage and to flow only the gas to the combustor, in formation of the water layer.

15. The fuel cell system according to Claim 12, wherein the water supplier (144) is constituted by utilizing a cooling water supplier of the fuel cell stack.

16. The fuel cell system according to Claim 12, wherein the water supplier (144) is operable independently of a cooling water supplier of the fuel cell stack.

## Patentansprüche

1. Verfahren zum Betrieb eines Brennstoffzellensystems, das umfasst:
eine Reduktionsmittelzufuhr (142) zum Zuführen eines Reduktionsmittels;
eine Oxidationsmittelzufuhr (143) zum Zuführen eines Oxidationsmittels;
einen Brennstoffzellenhauptkörper, der eine Mehrzahl von gestapelten Zellen (10) umfasst, wobei die Zellen (10) jeweils mit einem Reduktionsmitteldurchgang (21) und einem Oxidationsmitteldurchgang (31), die durch eine Membran-ElektrodenAnordnung (MEA) (5) mit einer Polymer-Elektrolyt-Membran (1) als Basismaterial isoliert sind, ausgestattet sind;
einen Reduktionsmittelzufuhrweg (112I), mit dem Reduktionsmittelzufuhrenden (211), bei denen es sich um Endabschnitte der Reduktionsmitteldurchgänge (21) von allen Zellen (10) handelt, verbunden sind;
einen Oxidationsmittelzufuhrweg (113I), mit dem Oxidationsmittelzufuhrenden (31I), bei denen es sich um Endabschnitte der Oxidationsmitteldurchgänge (31) von allen Zellen (10) handelt, verbunden sind; und
eine Wasserzufuhr (144) zum Zuführen von Wasser in den Reduktionsmittelzufuhrweg (112I) und/oder den Oxidationsmittelzufuhrweg (1131);
wobei
jede aus der Mehrzahl von Zellen (10) ein Paar von Separatoren (9), von denen jeder mit einem rillenförmigen Reduktionsmitteldurchgang (21) und einem rillenförmigen Oxidationsmitteldurchgang (31) ausgestattet ist, umfasst,
der Reduktionsmittelzufuhrweg (1121) ein Rohrelement und einen Reduktionsmittelzufuhrverteiler (92I) umfasst,
der Oxidationsmittelzufuhrweg (1131) ein Rohrelement und einen Oxidationsmittelzufuhrverteiler (93I) umfasst,
ein Reduktionsmittelentladungsweg (112E) mit einem Entladungsende des Reduktionsmitteldurchgangs (21) verbunden ist,
ein Oxidationsmittelentladungsweg (113E) mit einem Entladungsende des Oxidationsmitteldurchgangs (31) verbunden ist,
der Reduktionsmittelentladungsweg (112E) ein Rohrelement und einen Reduktionsmittelentladungsverteiler (92E) umfasst, und
der Oxidationsmittelentladungsweg (113E) ein Rohrelement und einen Oxidationsmittelentladungsverteiler (93E) umfasst,
**dadurch gekennzeichnet, dass** das Verfahren umfasst:
in einem Anlaufvorgang des Brennstoffzellensystems, einen Schritt zur Bildung einer Wasserschicht, in dem vor dem Beginn der Zufuhr des Reduktionsmittels und/oder des Oxidationsmittels in einem Zufuhrbeginnvorgang des Reduktionsmittels und/oder des Oxidationsmittels die Wasserzufuhr (144) Wasser zuführt, um eine Wasserschicht zu bilden, um wenigstens einen Abschnitt des Reduktionsmittelzufuhrwegs (1121), der stromaufwärts von dem Reduktionsmittelzufuhrende (21I) in einer Fließrichtung des Reduktionsmittels angeordnet ist, und/oder wenigstens einen Abschnitt des Oxidationsmittelzufuhrwegs (113I), der stromaufwärts von dem Oxidationsmittellzufuhrende (31I) in einer Fließrichtung des Oxidationsmittels angeordnet ist, zu füllen,
wobei es sich in dem Schritt zur Bildung einer Wasserschicht bei einem Wasserzufuhrdruck und einer Wasserzufuhrzeit des von der Wasserzufuhr (144) zugeführten Wassers jeweils um einen Wasserzufuhrdruck und eine Wasserzufuhrzeit handelt, mit denen das Wasser nicht durch alle Reduktionsmitteldurchgänge (21) und alle Oxidationsmittelduchgänge (31) fließt.

2. Verfahren zum Betrieb des Brennstoffzellensystems gemäß Anspruch 1, wobei in dem Schritt zur Bildung einer Wasserschicht ein Wasserzufuhrdruck des von der Wasserzufuhr zugeführten Wassers niedriger ist als ein Zufuhrdruck des von der Reduktionsmittelzufuhr (142) zugeführten Reduktionsmittels und als ein Zufuhrdruck des von der Oxidationsmittelzufuhr (143) zugeführten Oxidationsmittels.

3. Verfahren zum Betrieb eines Brennstoffzellensystems gemäß Anspruch 1, wobei das Brennstoffzellensystem weiterhin ein Ventil (131V-139V) umfasst, das mit einer Entladungsseite des Reduktionsmitteldurchgangs (21) und/oder des Oxidationsmitteldurchgangs (31) verbunden ist, und wobei in dem Schritt zur Bildung einer Wasserschicht die Zufuhr des Wassers begonnen wird in einen Zustand, bei dem das Ventil offen ist, und das Ventil geschlossen wird in einem Zustand, bei dem das Wasser alle Reduktionsmittelzufuhrenden (21I) erreicht hat und/oder in einem Zustand, bei dem das Wasser alle Oxidationsmittelzufuhrenden (31I) erreicht hat, um die Wasserzufuhr zu stoppen.

4. Verfahren zum Betrieb des Brennstoffzellensystems gemäß Anspruch 1, wobei das Brennstoffzellensystem weiterhin eine Brennkammer (125) umfasst, die mit einer Entladungsseite des Reduktionsmitteldurchgangs (21) und/oder des Oxidationsmitteldurchgangs (31) verbunden ist; wobei das Verfahren weiterhin einen Verbrennungsschritt umfasst, bei dem in dem Schritt zur Bildung einer Wasserschicht die Brennkammer ein Restgas, das von dem Reduktionsmitteldurchgang und/oder dem Oxidationsmitteldurchgang entladen wurde, verbrennt.

5. Verfahren zum Betrieb eines Brennstoffzellensystems gemäß Anspruch 5, wobei das Brennstoffzellensystem weiterhin eine Gas-Flüssigkeits-Trennvorrichtung (126, 127) umfasst, die mit einer Entladungsseite des Reduktionsmitteldurchgangs (21) und/oder des Oxidationsmitteldurchgangs (31) sowie mit einer stromaufwärts liegenden Seite der Brennkammer (125) verbunden ist; wobei das Verfahren weiterhin einen Trennschritt umfasst, bei dem in dem Schritt zur Bildung einer Wasserschicht die Gas-Flüssigkeits-Trennvorrichtung das Restgas und das Wasser, das von dem Reduktionsmitteldurchgang und/oder dem Oxidationsmitteldurchgang entladen wurde, trennt und nur das Gas in die Brennkammer leitet.

6. Verfahren zum Betrieb des Brennstoffzellensystems gemäß Anspruch 1, wobei die Wasserzufuhr (144) durch die Verwendung einer Kühlwasserzufuhr des Brennstoffzellenstapels gebildet wird.

7. Verfahren zum Betrieb des Brennstoffzellensystems gemäß Anspruch 1, wobei die Wasserzufuhr (144) unabhängig von einer Kühlwasserzufuhr des Brennstoffzellenstapels betrieben werden kann.

8. Verfahren zum Betrieb des Brennstoffzellensystems gemäß Anspruch 1, wobei in einem Zustand, bei dem es sich bei dem Restgas in dem Reduktionsmitteldurchgang (21) um das Reduktionsmittel handelt und bei dem Restgas in dem Oxidationsmitteldurchgang (31) um ein Inertgas handelt, der Schritt zur Bildung einer Wasserschicht nur für den Oxidationsmittelzufuhrweg (113I) durchgeführt wird.

9. Verfahren zum Betrieb des Brennstoffzellensystems gemäß Anspruch 1, wobei in einem Zustand, bei dem es sich bei dem Restgas in dem Reduktionsmitteldurchgang (21) um ein Inertgas handelt und bei dem Restgas in dem Oxidationsmitteldurchgang (31) um das Oxidationsmittel handelt, der Schritt zur Bildung einer Wasserschicht nur für den Reduktionsmittelzufuhrweg (112I) durchgeführt wird.

10. Verfahren zum Betrieb des Brennstoffzellensystems gemäß Anspruch 1, wobei in einem Zustand, bei dem es sich bei dem Restgas in dem Reduktionsmitteldurchgang (21) um das Reduktionsmittel handelt und bei dem Restgas in dem Oxidationsmitteldurchgang (31) um das Oxidationsmittel handelt, der Schritt zur Bildung einer Wasserschicht für den Reduktionsmittelzufuhrweg (112I) und den Oxidationsmittelzufuhrweg (113I) durchgeführt wird.

11. Verfahren zum Betrieb des Brennstoffzellensystems gemäß Anspruch 1, wobei der Reduktionsmittelzufuhrweg (1121) einen Reduktionsmittelzufuhrverteiler (92I) aufweist, mit dem die Reduktionsmittelzufuhrenden (21I) von allen Zellen (10) verbunden sind;
der Oxidationsmittelzufuhrweg einen Oxidationsmittelzufuhrverteiler (93I) aufweist, mit dem die Oxidationsmittelzufuhrenden (31I) von allen Zellen (10) verbunden sind; und wobei
es sich in dem Schritt zur Bildung einer Wasserschicht bei einer Menge des zugeführten Wassers um eine Menge an Wasser handelt, mit der der Reduktionsmittelzufuhrverteiler (92I) und/oder der Oxidationsmittelzufuhrverteiler (93I) geflutet werden.

12. Brennstoffzellensystem, das umfasst:
eine Reduktionsmittelzufuhr (142) zum Zuführen eines Reduktionsmittels;
eine Oxidationsmittelzufuhr (143) zum Zuführen eines Oxidationsmittels;
einen Brennstoffzellenhauptkörper, der eine Mehrzahl von gestapelten Zellen (10) umfasst, wobei die Zellen (10) jeweils mit einem Reduktionsmitteldurchgang (21) und einem Oxidationsmitteldurchgang (31), die durch eine Membran-ElektrodenAnordnung (MEA) (5) mit einer Polymer-Elektrolyt-Membran (1) als Basismaterial isoliert sind, ausgestattet sind;
einen Reduktionsmittelzufuhrweg (112I), mit dem Reduktionsmittelzufuhrenden (21I), bei denen es sich um Endabschnitte der Reduktionsmitteldurchgänge (21) von allen Zellen (10) handelt, verbunden sind;
einen Oxidationsmittelzufuhrweg (1131), mit dem Oxidationsmittelzufuhrenden (31I), bei denen es sich um Endabschnitte der Oxidationsmitteldurchgänge (31) von allen Zellen (10) handelt, verbunden sind; und
eine Wasserzufuhr (144) zum Zuführen von Wasser in den Reduktionsmittelzufuhrweg (112I) und/oder den Oxidationsmittelzufuhrweg (113I); und
eine Steuerung (300); wobei
jede aus der Mehrzahl von Zellen (10) ein Paar von Separatoren (9), von denen jeder mit einem rillenförmigen Reduktionsmitteldurchgang (21) und einem rillenförmigen Oxidationsmitteldurchgang (31) ausgestattet ist, umfasst,
der Reduktionsmittelzufuhrweg (1121) ein Rohrelement und einen Reduktionsmittelzufuhrverteiler (92I) umfasst,
der Oxidationsmittelzufuhrweg (113I) ein Rohrelement und einen Oxidationsmittelzufuhrverteiler (93I) umfasst,
ein Reduktionsmittelentladungsweg (112E) mit einem Entladungsende des Reduktionsmitteldurchgangs (21) verbunden ist,
ein Oxidationsmittelentladungsweg (113E) mit einem Entladungsende des Oxidationsmitteldurchgangs (31) verbunden ist,
der Reduktionsmittelentladungsweg (112E) ein Rohrelement und einen Reduktionsmittelentladungsverteiler (92E) umfasst, und
der Oxidationsmittelentladungsweg (113E) ein Rohrelement und einen Oxidationsmittelentladungsverteiler (93E) umfasst,
**dadurch gekennzeichnet, dass**
die Steuerung (300) dazu konfiguriert ist, in einem Schritt zur Bildung einer Wasserschicht in einem Anlaufvorgang des Brennstoffzellensystems die Wasserzufuhr (144) zu veranlassen, Wasser zuzuführen, um eine Wasserschicht zu bilden, um wenigstens einen Abschnitt des Reduktionsmittelzufuhrwegs (112I), der stromaufwärts von dem Reduktionsmittelzufuhrende (21I) in einer Fließrichtung des Reduktionsmittels angeordnet ist, und/oder wenigstens einen Abschnitt des Oxidationsmittelzufuhrwegs (113I), der stromaufwärts von dem Oxidationsmittellzufuhrende (31I) in einer Fließrichtung des Oxidationsmittels angeordnet ist, zu füllen, vor dem Beginn der Zufuhr von Reduktionsmittel und/oder Oxidationsmittel in einem Zufuhrbeginnvorgang des Reduktionsmittels und/oder des Oxidationsmittels,
wobei es sich in dem Schritt zur Bildung einer Wasserschicht bei einem Wasserzufuhrdruck und einer Wasserzufuhrzeit des von der Wasserzufuhr (144) zugeführten Wassers jeweils um einen Wasserzufuhrdruck und eine Wasserzufuhrzeit handelt, mit denen das Wasser nicht durch alle Reduktionsmitteldurchgänge (21) und alle Oxidationsmittelduchgänge (31) fließt.

13. Brennstoffzellensystem gemäß Anspruch 12, das weiterhin umfasst:
eine Brennkammer (125), die mit einer Entladungsseite des Reduktionsmitteldurchgangs (21) und/oder des Oxidationsmitteldurchgangs (31) verbunden ist;
wobei die Steuerung (300) dazu konfiguriert ist, die Brennkammer zu veranlassen, das bei der Bildung der Wasserschicht aus dem Reduktionsmitteldurchgang (21) und/oder dem Oxidationsmitteldurchgang (31) entladene Restgas zu verbrennen.

14. Brennstoffzellensystem gemäß Anspruch 13, das weiterhin umfasst:
eine Gas-Flüssigkeits-Trennvorrichtung (126, 127), die mit einer Entladungsseite des Reduktionsmitteldurchgangs (21) und/oder des Oxidationsmitteldurchgangs (31) verbunden ist;
wobei die Steuerung (300) dazu konfiguriert ist, die Gas-Flüssigkeits-Trennvorrichtung zu veranlassen, das bei der Bildung der Wasserschicht aus dem Reduktionsmitteldurchgang (21) und/oder dem Oxidationsmitteldurchgang (31) entladene Restgas und Wasser zu trennen und nur das Gas in die Brennkammer zu leiten.

15. Brennstoffzellensystem gemäß Anspruch 12, wobei die Wasserzufuhr (144) durch die Verwendung einer Kühlwasserzufuhr des Brennstoffzellenstapels gebildet wird.

16. Brennstoffzellensystem gemäß Anspruch 12, wobei die Wasserzufuhr (144) unabhängig von einer Kühlwasserzufuhr des Brennstoffzellenstapels betrieben werden kann.

## Revendications

1. Procédé d'actionnement d'un système de pile à combustible comportant :
un dispositif d'apport d'agent réducteur (142) destiné à fournir un agent réducteur,
un dispositif d'apport d'agent oxydant (143) destiné à fournir un agent oxydant,
un corps principal de pile à combustible comportant plusieurs cellules (10) empilées, les cellules (10) étant chacune pourvues d'un passage d'agent réducteur (21) et d'un passage d'agent oxydant (31) qui sont isolés par un ensemble membrane-électrodes (5) dont le matériau de base est une membrane électrolytique polymère (1),
une voie d'apport d'agent réducteur (112I) à laquelle sont reliées des extrémités d'apport d'agent réducteur (21I) consistant en des parties terminales des passages d'agent réducteur (21) de la totalité des cellules (10),
une voie d'apport d'agent oxydant (113I) à laquelle sont reliées des extrémités d'apport d'agent oxydant (31I) consistant en des parties terminales des passages d'agent oxydant (31) de la totalité des cellules (10), et
un dispositif d'apport d'eau (144) destiné à fournir de l'eau à la voie d'apport d'agent réducteur (112I) et/ou à la voie d'apport d'agent oxydant (113I) ;
dans lequel
chacune des plusieurs cellules (10) comporte une paire de séparateurs (9), chacun d'eux étant pourvu d'un passage d'agent réducteur (21) en forme de rigole et d'un passage d'agent oxydant (31) en forme de rigole,
la voie d'apport d'agent réducteur (112I) comporte un élément de conduite et un collecteur d'apport d'agent réducteur (92I),
la voie d'apport d'agent oxydant (113I) comporte un élément de conduite et un collecteur d'apport d'agent oxydant (93I),
une voie d'éjection d'agent réducteur (112E) est reliée à une extrémité d'éjection du passage d'agent réducteur (21),
une voie d'éjection d'agent oxydant (113E) est reliée à une extrémité d'éjection du passage d'agent oxydant (31),
la voie d'éjection d'agent réducteur (112E) comporte un élément de conduite et un collecteur d'éjection d'agent réducteur (92E), et
la voie d'éjection d'agent oxydant (113E) comporte un élément de conduite et un collecteur d'éjection d'agent oxydant (93E),
**caractérisé en ce que** ledit procédé comprend :
lors d'une opération de démarrage du système de pile à combustible, une étape de formation d'une couche aqueuse dans laquelle, avant de commencer l'apport de l'agent réducteur et/ou de l'agent oxydant dans le cadre d'une opération de commencement d'apport d'agent réducteur et/ou d'agent oxydant, le dispositif d'apport d'eau (144) fournit de l'eau servant à former une couche aqueuse de manière à engorger au moins une partie de la voie d'apport d'agent réducteur (1121) située en amont de l'extrémité d'apport d'agent réducteur (21I) dans le sens de l'écoulement de l'agent réducteur et/ou au moins une partie de la voie d'apport d'agent oxydant (1131) située en amont de l'extrémité d'apport d'agent oxydant (31I) dans le sens de l'écoulement de l'agent oxydant,
dans lequel, au cours de l'étape de formation d'une couche aqueuse, la pression d'apport de l'eau et l'heure d'apport de l'eau fournie par le dispositif d'apport d'eau (144) sont respectivement la pression d'apport de l'eau et l'heure d'apport de l'eau auxquelles l'eau ne traverse pas la totalité des passages d'agent réducteur (21) et la totalité des passages d'agent oxydant (31).

2. Procédé d'actionnement d'un système de pile à combustible selon la revendication 1, dans lequel, au cours de l'étape de formation d'une couche aqueuse, la pression d'apport de l'eau fournie par le dispositif d'apport d'eau est inférieure à la pression d'apport de l'agent réducteur fourni par le dispositif d'apport d'agent réducteur (142) et à la pression d'apport de l'agent oxydant fourni par le dispositif d'apport d'agent oxydant (143).

3. Procédé d'actionnement d'un système de pile à combustible selon la revendication 1, dans lequel le système de pile à combustible comporte en outre une vanne (131V-139V) reliée à un côté éjection du passage d'agent réducteur (21) et/ou du passage d'agent oxydant (31), et dans lequel, au cours de l'étape de formation d'une couche aqueuse, l'eau commence à être apportée lorsque la vanne est ouverte, et la vanne est refermée lorsque l'eau a atteint la totalité des extrémités d'apport d'agent réducteur (21I) et/ou lorsque l'eau a atteint la totalité des extrémités d'apport d'agent oxydant (31I) afin d'interrompre l'apport d'eau.

4. Procédé d'actionnement d'un système de pile à combustible selon la revendication 1, dans lequel le système de pile à combustible comporte en outre une chambre de combustion (125) reliée à un côté éjection du passage d'agent réducteur (21) et/ou du passage d'agent oxydant (31) ; le procédé comprenant en outre une étape de combustion, dans laquelle, au cours de l'étape de formation d'une couche aqueuse, la chambre de combustion assure la combustion d'un gaz résiduel rejeté par le passage d'agent réducteur et/ou le passage d'agent oxydant.

5. Procédé d'actionnement d'un système de pile à combustible selon la revendication 5, dans lequel le système de pile à combustible comporte en outre un séparateur gaz-liquide (126, 127) qui est relié à un côté éjection du passage d'agent réducteur (21) et/ou du passage d'agent oxydant (31) et à un côté amont de la chambre de combustion (125) ; le procédé comprenant en outre une étape de séparation dans laquelle, au cours de l'étape de formation d'une couche aqueuse, le séparateur gaz-liquide sépare le gaz résiduel et l'eau rejetés par le passage d'agent réducteur et/ou le passage d'agent oxydant pour ne laisser parvenir que le gaz dans la chambre de combustion.

6. Procédé d'actionnement d'un système de pile à combustible selon la revendication 1, dans lequel le dispositif d'apport d'eau (144) est assuré par la mise en oeuvre d'un dispositif d'apport d'eau de refroidissement de la pile à combustible.

7. Procédé d'actionnement d'un système de pile à combustible selon la revendication 1, dans lequel le dispositif d'apport d'eau (144) est exploitable indépendamment d'un dispositif d'apport d'eau de refroidissement de la pile à combustible.

8. Procédé d'actionnement d'un système de pile à combustible selon la revendication 1, dans lequel lorsque le gaz résiduel dans le passage d'agent réducteur (21) est l'agent réducteur et que le gaz résiduel dans le passage d'agent oxydant (31) est un gaz inerte, l'étape de formation d'une couche aqueuse concerne uniquement la voie d'apport d'agent oxydant (113I).

9. Procédé d'actionnement d'un système de pile à combustible selon la revendication 1, dans lequel lorsque le gaz résiduel dans le passage d'agent réducteur (21) est un gaz inerte et que le gaz résiduel dans le passage d'agent oxydant (31) est l'agent oxydant, l'étape de formation d'une couche aqueuse concerne uniquement la voie d'apport d'agent réducteur (112I).

10. Procédé d'actionnement d'un système de pile à combustible selon la revendication 1, dans lequel lorsque le gaz résiduel dans le passage d'agent réducteur (21) est l'agent réducteur et que le gaz résiduel dans le passage d'agent oxydant (31) est l'agent oxydant, l'étape de formation d'une couche aqueuse concerne aussi bien la voie d'apport d'agent réducteur (1121) que la voie d'apport d'agent oxydant (113I).

11. Procédé d'actionnement d'un système de pile à combustible selon la revendication 1, dans lequel la voie d'apport d'agent réducteur (112I) possède un collecteur d'apport d'agent réducteur (92I) auquel sont reliées les extrémités d'apport d'agent réducteur (21I) de la totalité des cellules (10),
la voie d'apport d'agent oxydant possède un collecteur d'apport d'agent oxydant (93I) auquel sont reliées les extrémités d'apport d'agent oxydant (31I) de la totalité des cellules (10), et dans lequel
au cours de l'étape de formation d'une couche aqueuse, la quantité d'eau fournie est une quantité d'eau avec laquelle le collecteur d'apport d'agent réducteur (92I) et/ou le collecteur d'apport d'agent oxydant (93I) sont noyés.

12. Système de pile à combustible comprenant :
un dispositif d'apport d'agent réducteur (142) destiné à fournir un agent réducteur,
un dispositif d'apport d'agent oxydant (143) destiné à fournir un agent oxydant,
un corps principal de pile à combustible comportant plusieurs cellules (10) empilées, les cellules (10) étant chacune pourvues d'un passage d'agent réducteur (21) et d'un passage d'agent oxydant (31) qui sont isolés par un ensemble membrane-électrodes (5) dont le matériau de base est une membrane électrolytique polymère (1),
une voie d'apport d'agent réducteur (1121) à laquelle sont reliées des extrémités d'apport d'agent réducteur (21I) consistant en des parties terminales des passages d'agent réducteur (21) de la totalité des cellules (10),
une voie d'apport d'agent oxydant (113I) à laquelle sont reliées des extrémités d'apport d'agent oxydant (31I) consistant en des parties terminales des passages d'agent oxydant (31) de la totalité des cellules (10), et
un dispositif d'apport d'eau (144) destiné à fournir de l'eau à la voie d'apport d'agent réducteur (112I) et/ou à la voie d'apport d'agent oxydant (113I) ; et
un organe de commande (300) ; dans lequel
chacune des plusieurs cellules (10) comporte une paire de séparateurs (9), chacun d'eux étant pourvu d'un passage d'agent réducteur (21) en forme de rigole et d'un passage d'agent oxydant (31) en forme de rigole,
la voie d'apport d'agent réducteur (112I) comporte un élément de conduite et un collecteur d'apport d'agent réducteur (92I),
la voie d'apport d'agent oxydant (113I) comporte un élément de conduite et un collecteur d'apport d'agent oxydant (93I),
une voie d'éjection d'agent réducteur (112E) est reliée à une extrémité d'éjection du passage d'agent réducteur (21),
une voie d'éjection d'agent oxydant (113E) est reliée à une extrémité d'éjection du passage d'agent oxydant (31),
la voie d'éjection d'agent réducteur (112E) comporte un élément de conduite et un collecteur d'éjection d'agent réducteur (92E), et
la voie d'éjection d'agent oxydant (113E) comporte un élément de conduite et un collecteur d'éjection d'agent oxydant (93E),
**caractérisé en ce que**
l'organe de commande (300) est configuré pour, au cours d'une étape de formation d'une couche aqueuse d'une opération de démarrage du système de pile à combustible, amener le dispositif d'apport d'eau (144) à fournir de l'eau afin de former une couche aqueuse de manière à engorger au moins une partie de la voie d'apport d'agent réducteur (112I) située en amont de l'extrémité d'apport d'agent réducteur (21I) dans le sens de l'écoulement de l'agent réducteur et/ou au moins une partie de la voie d'apport d'agent oxydant (113I) située en amont de l'extrémité d'apport d'agent oxydant (31I) dans le sens de l'écoulement de l'agent oxydant, avant de commencer l'apport de l'agent réducteur et/ou de l'agent oxydant dans le cadre d'une opération de commencement d'apport d'agent réducteur et/ou d'agent oxydant,
dans lequel, au cours de l'étape de formation d'une couche aqueuse, la pression d'apport de l'eau et l'heure d'apport de l'eau fournie par le dispositif d'apport d'eau (144) sont respectivement la pression d'apport de l'eau et l'heure d'apport de l'eau auxquelles l'eau ne traverse pas la totalité des passages d'agent réducteur (21) et la totalité des passages d'agent oxydant (31).

13. Système de pile à combustible selon la revendication 12, comprenant en outre :
une chambre de combustion (125) reliée à un côté éjection du passage d'agent réducteur (21) et/ou du passage d'agent oxydant (31) ;
l'organe de commande (300) étant configuré pour amener la chambre de combustion à assurer la combustion du gaz résiduel rejeté par le passage d'agent réducteur (21) et/ou le passage d'agent oxydant (31) au cours de la formation de la couche d'eau.

14. Système de pile à combustible selon la revendication 13, comprenant en outre :
un séparateur gaz-liquide (126, 127) qui est relié à un côté éjection du passage d'agent réducteur (21) et/ou du passage d'agent oxydant (31) ;
l'organe de commande (300) étant configuré pour amener le séparateur gaz-liquide à séparer le gaz résiduel et l'eau rejetés par le passage d'agent réducteur et/ou le passage d'agent oxydant pour ne laisser parvenir que le gaz dans la chambre de combustion, au cours de la formation de la couche d'eau.

15. Système de pile à combustible selon la revendication 12, dans lequel le dispositif d'apport d'eau (144) est assuré par la mise en oeuvre d'un dispositif d'apport d'eau de refroidissement de la pile à combustible.

16. Système de pile à combustible selon la revendication 12, dans lequel le dispositif d'apport d'eau (144) est exploitable indépendamment d'un dispositif d'apport d'eau de refroidissement de la pile à combustible.
